(19) Europäisches Patentamt
European Patent Office
Office européen des brevets

(11) **EP 4 425 426 B1**

(12) **EUROPEAN PATENT SPECIFICATION**

(45) Date of publication and mention
of the grant of the patent:
**25.03.2026 Bulletin 2026/13**

(21) Application number: **24158820.1**

(22) Date of filing: **21.02.2024**

(51) International Patent Classification (IPC):
***G06T 7/00*** *(2017.01)*

(52) Cooperative Patent Classification (CPC):
**G06T 7/0008;** G06T 2207/10048;
G06T 2207/20081; G06T 2207/20084;
G06T 2207/30124

(54) **ABNORMALITY DETERMINATION DEVICE, ABNORMALITY DETERMINATION METHOD, AND ABNORMALITY DETERMINATION PROGRAM**

ANOMALIEBESTIMMUNGSVORRICHTUNG, ANOMALIEBESTIMMUNGSVERFAHREN UND ANOMALIEBESTIMMUNGSPROGRAMM

DISPOSITIF DE DÉTERMINATION D'ANOMALIE, PROCÉDÉ DE DÉTERMINATION D'ANOMALIE ET PROGRAMME DE DÉTERMINATION D'ANOMALIE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **03.03.2023 JP 2023032375**

(43) Date of publication of application:
**04.09.2024 Bulletin 2024/36**

(73) Proprietor: **TMT Machinery, Inc.
Osaka-shi, Osaka 541-0041 (JP)**

(72) Inventors:
• **Kitagawa, Shigeki**
**Kyoto-shi, Kyoto, 612-8686 (JP)**
• **Hashimoto, Kinzo**
**Kyoto-shi, Kyoto, 612-8686 (JP)**
• **Yoshida, Kazuto**
**Kyoto-shi, Kyoto, 612-8686 (JP)**
• **Matsuda, Ryo**
**Kyoto-shi, Kyoto, 612-8686 (JP)**

(74) Representative: **Grünecker Patent- und
Rechtsanwälte
PartG mbB
Leopoldstraße 4
80802 München (DE)**

(56) References cited:
CN-A- 109 615 000     CN-A- 110 175 659
CN-A- 113 758 579     JP-A- H0 986 795
JP-A- H10 280 226     JP-A- H11 200 231

**Description**

TECHNICAL FIELD

The present disclosure mainly relates to an abnormality determination device, an abnormality determination method and an abnormality determination program that outputs an abnormality determination result relating to a yarn in synthetic fiber manufacturing equipment.

BACKGROUND ART

Japanese Patent Application Laid-Open No. H11-279923 (Patent Document 1) discloses a defect detection device that detects a spinning defect when producing fabric by spinning a plurality of yarns in rows. The defect detection device includes a CCD camera and a data processing unit. The CCD camera captures an image of a plurality of yarns and outputs a video signal to the data processing unit. The data processing unit detects a spinning defect based on the video signal. Specifically, the positions (pixels) in the video signal to which the plurality of yarns correspond are stored in advance. For example, when an abnormality such as misalignment or breakage of a yarn occurs, the detection intensity at the position (pixel) corresponding to the yarn where the abnormality has occurred decreases. Accordingly, the data processing unit detects a spinning defect based on the detection intensity of each pixel of the video signal.

Japanese Patent Application Laid-Open No. H11-279923 is an example of related art.

In Patent Document 1, the pixel in the video signal to which the yarn corresponds is stored in advance. However, since the width of the yarn is generally narrow and the position of the yarn changes easily, a situation in which the yarn is not displayed at the corresponding pixel may occur frequently. That is, it may not be possible to accurately detect an abnormality regarding the yarn by merely analyzing a visible image including the yarn. Japanese Patent Application Laid-Open No. H10-280226 proposes to provide a fiber abnormality detector capable of directly measuring a traveling fiber to detect its abnormality in a process for producing the fiber such as a synthetic fiber and thereby capable of minimizing the loss of the abnormal fiber, and to provide a method for detecting the abnormality of the fiber. The fiber abnormality detector is made up by arranging two heat-sensitive elements capable of detecting the heat information of a fiber in a non-contact state in parallel so that both the elements have the same polarity, electrically connecting the same polarity electrodes of the elements to each other, converting heat information from one of the other same polarity electrodes of the elements into electric signals and taking out the electric signals. The fiber abnormality detector is disposed in a fiber-traveling route which is periodically changed, or disposed so that heat information can intermittently be incident on the detector, thus detecting the abnormality of the fiber.

The present disclosure has been made in view of the above circumstances, and a main purpose thereof is to provide an abnormality determination device that can accurately determine an abnormality regarding a yarn.

SUMMARY OF THE INVENTION

In the present disclosure, an abnormality determination device is provided. The above-described abnormality determination device includes: an input unit configured to receive input of a thermal image including a yarn path region, which is a part of a yarn guide included in synthetic fiber manufacturing equipment; a determination unit configured to determine whether or not there is an abnormality regarding a yarn based on the thermal image input to the input unit; and an output unit configured to output a determination result of the determination unit.

In one example of the present disclosure, the determination unit determines whether or not there is the abnormality based on the thermal image for determination input to the input unit and a determination model generated by performing machine learning on a plurality of pieces of training data. Each of the plurality of pieces of training data associates, as a label, whether or not there is the abnormality regarding the yarn passing through the yarn guide with a thermal image for training in which the yarn guide included in the synthetic fiber manufacturing equipment or other synthetic fiber manufacturing equipment appears.

In one example of the present disclosure, the abnormality determination device further includes a training unit configured to generate the determination model from the plurality of pieces of training data.

In one example of the present disclosure, the abnormality includes an abnormality in a yarn path.

In one example of the present disclosure, the abnormality includes an abnormality in yarn tension.

In one example of the present disclosure, the abnormality includes an abnormality in an amount of oil applied to the yarn.

In one example of the present disclosure, the abnormality determination device includes a plurality of the trained determination models for corresponding operating conditions of the synthetic fiber manufacturing equipment that are similar. The determination unit selects the determination model corresponding to the current operating condition of the synthetic fiber manufacturing equipment from among the plurality of determination models, and determines whether or not there is the abnormality based on the selected determination model and the thermal image for determination input to the input unit.

In one example of the present disclosure, the synthetic fiber manufacturing equipment further includes an image capture device configured to be capable of capturing an image of the yarn guide. The thermal image to be input to the input unit is acquired from the image capture device.

In one example of the present disclosure, the abnormality determination device includes a plurality of the trained determination models for corresponding positional relationships between the yarn guide and the image capture device included in the synthetic fiber manufacturing equipment or the other synthetic fiber manufacturing equipment. The determination unit selects the determination model corresponding to a positional relationship between the yarn guide and the image capture device included in the synthetic fiber manufacturing equipment from among the plurality of determination models, and determines whether or not there is the abnormality based on the selected determination model and the thermal image for determination input to the input unit.

In one example of the present disclosure, the synthetic fiber manufacturing equipment is a spinning take-up machine.

In one example of the present disclosure, the synthetic fiber manufacturing equipment is a false-twisting machine.

In the present disclosure, an abnormality determination method is provided. The abnormality determination method includes: a step of inputting a thermal image including a yarn path region, which is a part of a yarn guide included in synthetic fiber manufacturing equipment; a step of determining whether or not there is an abnormality regarding a yarn based on the thermal image input in the step of inputting; and a step of outputting a determination result of the step of determining.

In one example of the present disclosure, in the step of determining, it is determined whether or not there is the abnormality based on the thermal image for determination input in the step of inputting and a determination model generated by performing machine learning of a plurality of pieces of training data. Each of the plurality of pieces of training data associates, as a label, whether or not there is the abnormality regarding the yarn passing through the yarn guide with a thermal image for training in which the yarn guide included in the synthetic fiber manufacturing equipment or other synthetic fiber manufacturing equipment appears.

In one example of the present disclosure, the abnormality determination method further includes a step of generating the determination model from the plurality of pieces of training data.

In one example of the present disclosure, the abnormality includes an abnormality in a yarn path.

In one example of the present disclosure, the abnormality determination method further includes a step of acquiring a plurality of the trained determination models for corresponding operating conditions of the synthetic fiber manufacturing equipment that are similar. The step of determining includes: a step of selecting the determination model corresponding to the current operating condition of the synthetic fiber manufacturing equipment from among the plurality of determination models; and a step of determining whether or not there is the abnormality based on the selected determination model and the thermal image for determination input in the step of inputting.

In one example of the present disclosure, the synthetic fiber manufacturing equipment further includes an image capture device configured to be capable of capturing an image of the yarn guide. The thermal image to be input in the step of inputting is acquired from the image capture device.

In one example of the present disclosure, the abnormality determination method further includes a step of acquiring a plurality of the trained determination models for corresponding positional relationships between the yarn guide and the image capture device included in the synthetic fiber manufacturing equipment or the other synthetic fiber manufacturing equipment. The step of determining includes: a step of selecting the determination model corresponding to a positional relationship between the yarn guide and the image capture device included in the synthetic fiber manufacturing equipment from among the plurality of determination models, and a step of determining whether or not there is the abnormality based on the selected determination model and the thermal image for determination input in the step of inputting.

In the present disclosure, an abnormality determination program is provided. The abnormality determination program causes an abnormality determination device to execute: a step of inputting a thermal image including a yarn path region, which is a part of a yarn guide included in synthetic fiber manufacturing equipment; a step of determining whether or not there is an abnormality regarding a yarn based on the thermal image input in the step of inputting; and a step of outputting a determination result of the step of determining.

In one example of the present disclosure, in the step of determining, it is determined whether or not there is the abnormality based on the thermal image for determination input in the step of inputting and a determination model generated by performing machine learning of a plurality of pieces of training data. Each of the plurality of pieces of training data associates, as a label, whether or not there is the abnormality regarding a yarn passing through the yarn guide with a thermal image for training in which the yarn guide included in the synthetic fiber manufacturing equipment or other synthetic fiber manufacturing equipment appears.

In one example of the present disclosure, the abnormality determination program further causes the abnormality determination device to execute a step of generating the determination model from the plurality of pieces of training data.

In one example of the present disclosure, the abnormality includes an abnormality in a yarn path.

In one example of the present disclosure, the abnormality determination program further causes the abnormality determination device to execute a step of acquiring a plurality of the trained determination models for corresponding operating conditions of the synthetic fiber manufacturing equipment that are similar. The step of determining includes: a step of selecting the determination model corresponding to the current operating condition of the synthetic fiber manufacturing equipment from among the plurality of determination models; and a step of determining whether or not there is the abnormality based on the selected determination model and the thermal image for determination input in the step of inputting.

In one example of the present disclosure, the synthetic fiber manufacturing equipment further includes an image capture device configured to be capable of capturing an image of the yarn guide. The thermal image to be input in the step of inputting is acquired from the image capture device.

In one example of the present disclosure, the abnormality determination program further causes the abnormality determination device to execute a step of acquiring a plurality of the trained determination models for corresponding positional relationships between the yarn guide and the image capture device included in the synthetic fiber manufacturing equipment or the other synthetic fiber manufacturing equipment. The step of determining includes: a step of selecting the determination model corresponding to a positional relationship between the yarn guide and the image capture device included in the synthetic fiber manufacturing equipment from among the plurality of determination models, and a step of determining whether or not there is the abnormality based on the selected determination model and the thermal image for determination input in the step of inputting.

BRIEF DESCRIPTION OF THE DRAWINGS

FIG. 1 is a diagram showing a side view of a spinning take-up machine according to an embodiment of the present invention.

FIG. 2 is a diagram showing a front view of a yarn winding machine.

FIG. 3 is a diagram showing a block diagram of the yarn winding machine.

FIG. 4 is a diagram showing processing for constructing a determination model through machine learning.

FIG. 5 is a diagram showing processing for obtaining a determination result using a determination model.

FIG. 6 is a diagram showing a state and a thermal image of a yarn path region and a yarn guide when yarns and the yarn guide are normal.

FIG. 7 is a diagram showing a state and a thermal image of the yarn path region and the yarn guide when the yarns or the yarn guide is abnormal.

FIG. 8 is a diagram showing a flowchart regarding yarn abnormality determination using a determination model.

FIG. 9 is a diagram showing an example of a hardware configuration of a control device.

FIG. 10 is a diagram showing an example of a training dataset.

FIG. 11 is a diagram showing an example of a functional configuration of a control device.

FIG. 12 is a diagram conceptually showing training processing performed by a training unit.

FIG. 13 is a diagram conceptually showing abnormality determination processing performed by a determination unit.

FIG. 14 is a diagram showing an example of a device configuration of an abnormality determination system.

FIG. 15 is a diagram showing an example of a training dataset.

FIG. 16 is a diagram showing a flowchart regarding determination processing.

FIG. 17 is a diagram showing an example of a training dataset.

FIG. 18 is a diagram showing a flowchart regarding determination processing.

FIG. 19 is a diagram schematically showing cutout processing.

FIG. 20 is a diagram showing a side view of a false-twisting machine.

EMBODIMENTS OF THE INVENTION

Hereinafter, embodiments according to the present invention will be described with reference to the drawings. In the following description, identical components and constituent elements are denoted by identical reference numerals. Their names and functions are also the same. Accordingly, detailed description thereof will not be repeated. Note that the embodiments and modified examples described hereinafter may be selectively combined as appropriate.

A. Spinning Take-Up Machine 1

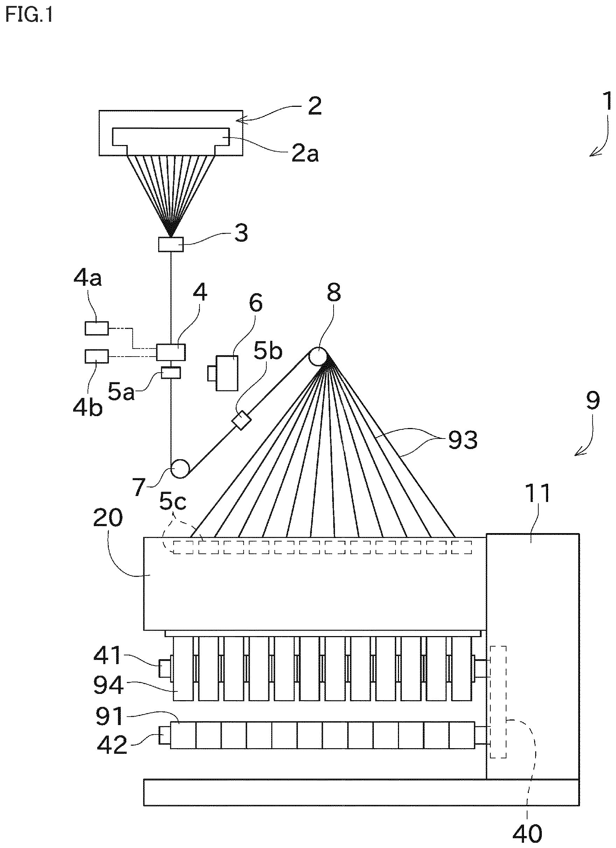

Next, embodiments of the present invention will be described with reference to the drawings. FIG. 1 is a side view of a spinning take-up machine (synthetic fiber manufacturing equipment) 1 according to an embodiment of the present invention.

The spinning take-up machine 1 shown in FIG. 1 includes a spinning device 2 and a yarn winding machine 9. The spinning device 2 includes a spinneret 2a. A molten fiber material such as nylon or polyester is supplied to the spinning device 2 from a raw material supply device (not shown). The spinning device 2 extrudes the molten fiber material at a high temperature from the spinneret 2a. As a result, a plurality of yarns 93 are spun from the spinneret 2a. The yarn winding machine 9 winds the yarns 93 spun by the spinning device 2 to manufacture packages 94. Note that the yarns 93 are, for example, synthetic yarns such as nylon or polyester. The yarns 93 are not a short-fiber yarns such as a spun yarns, but long-fiber yarns (filament yarns). Also, the yarns 93 may be elastic yarns such as spandex.

In the travel direction of the yarns 93, an oil supply guide 3, a yarn cutting/suction device 4, a first yarn guide 5a, a first godet roller 7, a second yarn guide 5b, a second godet roller 8, and third yarn guides 5c are arranged between the spinning device 2 and the yarn winding machine 9.

The oil supply guide 3 applies oil to the yarns 93 while guiding the yarns 93 spun from the spinning device 2. The yarn cutting/suction device 4 is arranged downstream of the oil supply guide 3. The yarn cutting/suction device 4 is connected to a drive device 4a and a suction source 4b. The yarn cutting/suction device 4 can move forward and backward relative to the yarns 93 with the driving force of the drive device 4a. The yarn cutting/suction device 4 can suction the yarns 93 due to the negative pressure of the suction source 4b. The first yarn guide 5a is arranged downstream of the yarn cutting/suction device 4. The first yarn guide 5a guides the plurality of yarns 93 individually. The detailed shape of the first yarn guide 5a will be described later.

An image capture device 6 is provided in the surrounding area of the first yarn guide 5a. The image capture device 6 is arranged such that its lens faces the first yarn guide 5a, and captures an image of the first yarn guide 5a to generate an image. The image capture device 6 is a thermal camera, and measures the temperature of an object based on the intensity of far-infrared rays emitted from the object to generate a thermal image. A thermal image is an image generated by varying density, brightness, saturation, and the like based on the temperature of an object. Note that the thermal image does not necessarily need to be generated based on the intensity of far-infrared rays emitted from the object, and may also be raw data output from a thermal camera. The raw data indicates, for example, the temperature at each location of the object in an array. Also, the thermal image does not necessarily need to be acquired from the image capture device 6, and may also be acquired from a temperature sensor or the like. The image capture device 6 captures an image of the yarn path region. The yarn path region indicates a region through which the yarn paths (routes along which the yarns 93 pass) pass. Specifically, this is a region through which the yarn paths are expected to pass under normal conditions, and the yarns 93 do not necessarily pass through the yarn path region under abnormal conditions. The yarn path region is the route of the yarns 93 that is envisioned at the time of design, and is derived, for example, from the positions of various members that guide the yarns 93. Specifically, the image capture device 6 captures an image of the yarn path region including a portion of the first yarn guide 5a to generate a thermal image. The thermal image generated by the image capture device 6 is used to determine abnormalities regarding the yarns 93, as will be described later.

The first godet roller 7 and the second godet roller 8 are driven by a motor (not shown). The first godet roller 7 and the second godet roller 8 can take up the yarns 93 by winding the yarns 93 and rotating. Also, in the travel direction of the yarns 93, a second yarn guide 5b is arranged between the first godet roller 7 and the second godet roller 8. The second yarn guide 5b individually guides the plurality of yarns 93 heading from the first godet roller 7 to the second godet roller 8. The first godet roller 7 is arranged downstream of the first yarn guide 5a. The first godet roller 7 takes up the yarns 93 from the first yarn guide 5a. The second godet roller 8 is arranged downstream of the first godet roller 7. The second godet roller 8 takes up the yarns 93 from the first godet roller 7. The yarn winding machine 9 is arranged downstream of the second godet roller 8. The yarns 93 that have passed through the second godet roller 8 are guided by the third yarn guides 5c and are supplied to the yarn winding machine 9. The third yarn guides 5c are arranged between the second godet roller 8 and a later-described traverse device 21 in the travel direction of the yarns 93. The third yarn guides 5c guide the plurality of yarns 93 individually.

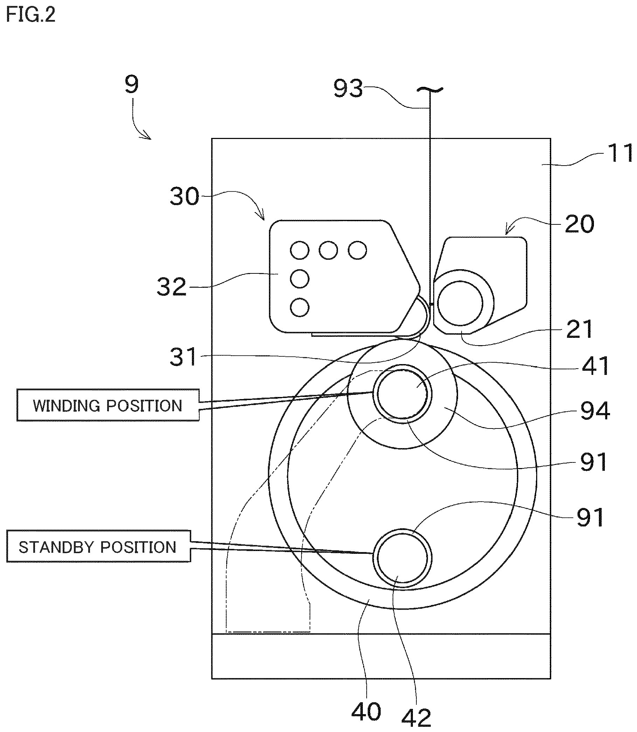

Next, the yarn winding machine 9 will be described with reference to FIGS. 1 to 3. As shown in FIGS. 1 and 2, the yarn winding machine 9 includes a frame 11, a first housing 20, a second housing 30, and a turret plate 40.

The frame 11 is a member that holds various parts of the yarn winding machine 9. The first housing 20 and the second housing 30 are attached to the frame 11. The first housing 20 and the second housing 30 are movable up and down relative to the frame 11.

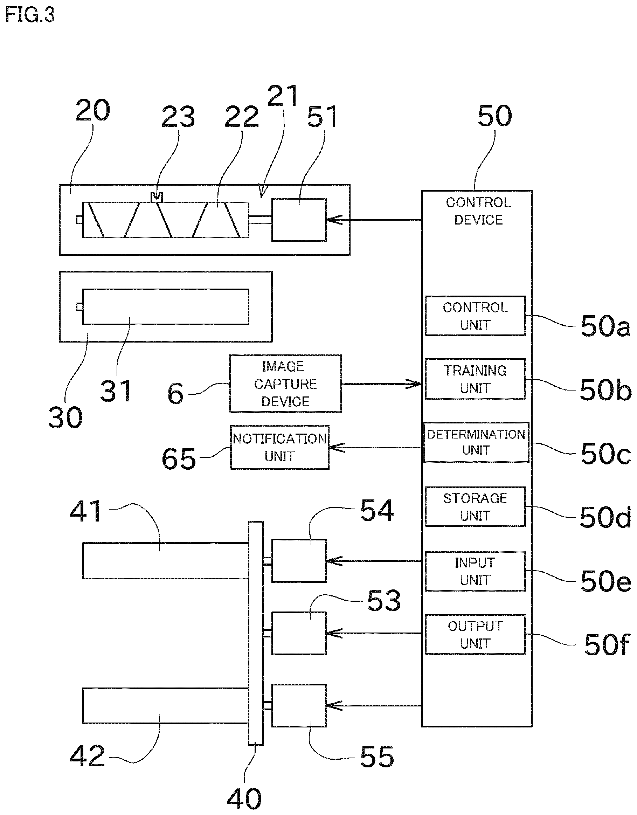

The traverse device 21 is attached to the first housing 20. The traverse device 21 traverses the yarns 93 to be sent downstream by performing reciprocal motion in the winding widths of the packages 94 along the axial direction of a later-described first bobbin holder 41 while a later-described traverse guide 23 is engaged with the yarns 93. This traverse motion of the yarns 93 forms yarn layers on the bobbins 91 or the packages 94. As shown in FIG. 3, the traverse device 21 includes a traverse cam 22 and a traverse guide 23.

The traverse cam 22 is a roller-shaped member arranged parallel to the bobbins 91 or the packages 94. A spiral cam groove is formed on the outer circumferential surface of the traverse cam 22. The traverse cam 22 is rotationally driven by a traverse motor 51.

The traverse motor 51 is controlled by a later-described control device 50. The traverse guide 23 is a portion that engages with the yarns 93. The distal end of the traverse guide 23 has, for example, a substantially U-shaped guide portion, which engages with the yarn 93 so as to sandwich the yarn 93 in the winding width direction. The base end of the traverse guide 23 is located in a cam groove of the traverse cam 22. With this configuration, by rotationally driving the traverse cam 22, the traverse guide 23 can be caused to perform reciprocal motion in the winding width direction.

A contact roller 31 is rotatably attached to the second housing 30. When winding the yarns 93, the contact roller 31 is driven to rotate while in contact with the yarn layers of the packages 94 at a predetermined pressure, whereby the yarns 93 from the traverse guide 23 are sent to the yarn layers of the packages 94, and the yarn layer shapes of the packages 94 are adjusted. Note that the contact roller 31 may also be rotationally driven using a drive section such as a motor.

The second housing 30 is provided with an operation panel 32. The operation panel 32 is a device operated by an operator. The operator issues instructions to the yarn winding machine 9 by operating the operation panel 32. Examples of instructions issued by the operator include starting winding, stopping winding, and changing winding conditions.

The turret plate 40 is a disc-shaped member. The turret plate 40 is rotatably attached to the frame 11. The turret plate 40 is rotatable with a normal line passing through the center of the disk serving as a rotation axis. The turret plate 40 is rotationally driven by a turret motor 53 shown in FIG. 3. The turret motor 53 is controlled by a later-described control device 50.

On the turret plate 40, a first bobbin holder 41 and a second bobbin holder 42 are provided at two positions facing each other across the center of the disk. A plurality of bobbins 91 can be attached to the first bobbin holder 41, side by side in the axial direction of the first bobbin holder 41. A plurality of bobbins 91 can be attached to the second bobbin holder 42, side by side in the axial direction of the second bobbin holder 42. By rotating the turret plate 40, the positions of the first bobbin holder 41 and the second bobbin holder 42 can be changed. Note that as long as the positions of the first bobbin holder 41 and the second bobbin holder 42 can be changed, another device may also be used instead of the turret plate 40.

The first bobbin holder 41 is rotatable with respect to the turret plate 40 with the axial position of the first bobbin holder 41 serving as the rotation center. The first bobbin holder 41 is rotationally driven by a first bobbin holder motor 54 shown in FIG. 3. Similarly, the second bobbin holder 42 is rotatable with respect to the turret plate 40 with the axial position of the second bobbin holder 42 serving as the rotation center. The second bobbin holder 42 is rotationally driven by a second bobbin holder motor 55 shown in FIG. 3. The first bobbin holder motor 54 and the second bobbin holder motor 55 are controlled by the later-described control device 50.

Hereinafter, the first bobbin holder 41 and the second bobbin holder 42 will be collectively referred to as bobbin holders 41 and 42. In FIG. 2, the bobbin holders 41 and 42 are shown arranged one above the other. At this time, the higher position of the bobbin holders 41 and 42 is the winding position, and the lower position of the bobbin holders 41 and 42 is the standby position. The yarn winding machine 9 winds the yarns 93 around the bobbins 91 of the bobbin holders 41 and 42 at the winding position to manufacture the packages 94.

Also, when a predetermined amount of the yarns 93 is wound and the packages 94 of the first bobbin holder 41 are fully wound, the positions of the first bobbin holder 41 and the second bobbin holder 42 are switched by rotating the turret plate 40. Thereafter, the fully-wound packages 94 of the first bobbin holder 41 at the standby position are collected, and the yarns 93 are wound onto the bobbins 91 of the second bobbin holder 42 at the winding position. New bobbins 91 are attached to the first bobbin holder 41 from which the packages 94 were collected.

The control device 50 includes a control unit 50a, a training unit 50b, a determination unit 50c, a storage unit 50d, an input unit 50e, and an output unit 50f. Specifically, the control device 50 is configured as a known computer, and includes a CPU (Central Processing Unit), a RAM (Random Access Memory), an SSD (Solid State Drive), and the like. A CPU is a type of processor. A program and data for controlling the yarn winding machine 9 are stored in advance in the SSD. Due to the CPU reading out the program to the RAM and executing the read-out program, the control device 50 can operate as the control unit 50a, the training unit 50b, and the determination unit 50c. Also, the SSD corresponds to the storage unit 50d. Note that an HDD (Hard Disk Drive) or a flash memory may be used instead of the SSD. Alternatively, a storage that is provided outside the control device 50 and is capable of communicating with the control device 50 may also be used as the storage unit. The input unit 50e and the output unit 50f are specifically communication modules, the input unit 50e receives input of data from the outside, and the output unit 50f outputs data to the outside. In this embodiment, the control device 50 corresponds to an abnormality determination device. That is, in this embodiment, the device that controls the spinning take-up machine 1 and the device that performs abnormality determination are the same. Instead of this, a device that performs abnormality determination but does not control the spinning take-up machine 1 may also be provided as the abnormality determination device.

The control unit 50a manages overall control performed by the control device 50. The control unit 50a processes data input to the input unit 50e of the control device 50 from the outside or data stored in the storage unit 50d. The control unit 50a stores the data obtained through this processing in the storage unit 50d, or outputs it to the outside of the control device 50. The training unit 50b performs processing for constructing a determination model using machine learning. Details of the determination model constructed by the training unit 50b will be described later. The determination unit 50c performs determination processing based on data input from the outside to the control device 50 (specifically, the thermal image from the image capture device 6) and the determination model constructed by the training unit 50b and stored in the storage unit 50d. The storage unit 50d stores data according to the processing performed by the control unit 50a.

In FIG. 3, a notification unit 65 is shown. The notification unit 65 notifies the operator of the determination result of the determination unit 50c. The notification unit 65 is, for example, a notification lamp or a notification buzzer.

An abnormality that can be determined by the control device 50 is an abnormality regarding the yarns 93. Specifically, it is an abnormality in the yarn path of the yarns 93, an abnormality in the yarn tension of the yarns 93, or an abnormality in the amount of oil applied to the yarns 93. In the present embodiment, as an example, an abnormality in the yarn path of the yarns 93 is determined, but instead of or in addition to this, it may be possible to further determine at least one abnormality described above.

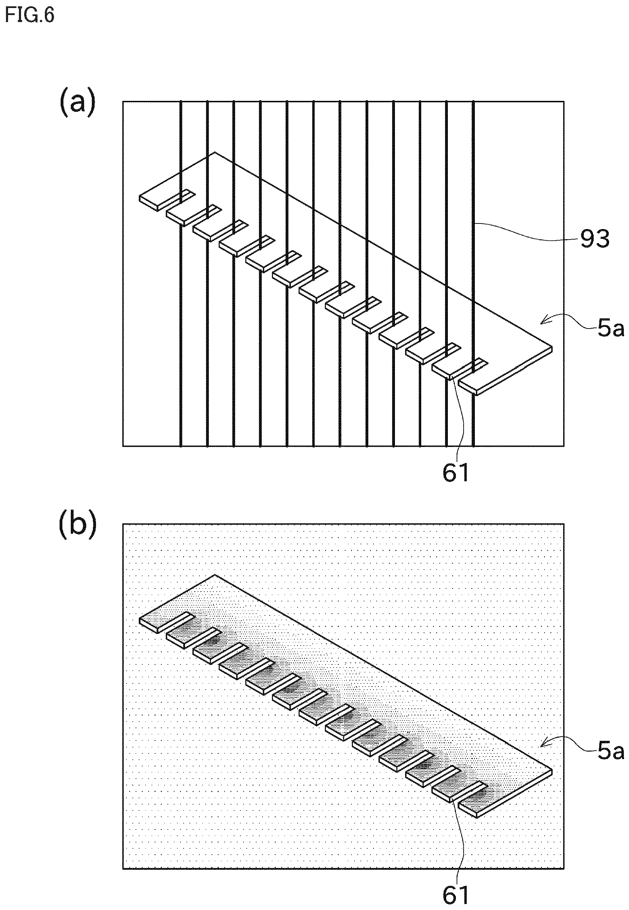

FIG. 6(a) shows a state of the yarn path region and the first yarn guide 5a when the yarn path is normal. As shown in FIG. 6(a), the first yarn guide 5a is a comb-like member. A plurality of guide grooves 61 for individually guiding the plurality of yarns 93 are formed in the first yarn guide 5a. When the yarn path is normal, one correct yarn 93 enters one guide groove 61 and is guided, as shown in FIG. 6(a). Here, when the yarns 93 are guided by the first yarn guide 5a, the yarns 93 and the first yarn guide 5a come into contact with each other. For this reason, frictional heat is generated. FIG. 6(b) shows a thermal image generated in this state. As shown in FIG. 6(b), in this thermal image, the temperature at the contact points between the yarns 93 and the first yarn guide 5a and the vicinities thereof is higher than the ambient temperature. Furthermore, since the yarns 93 are in all of the guide grooves 61, the temperature of all of the guide grooves 61 is higher than that of the surrounding area.

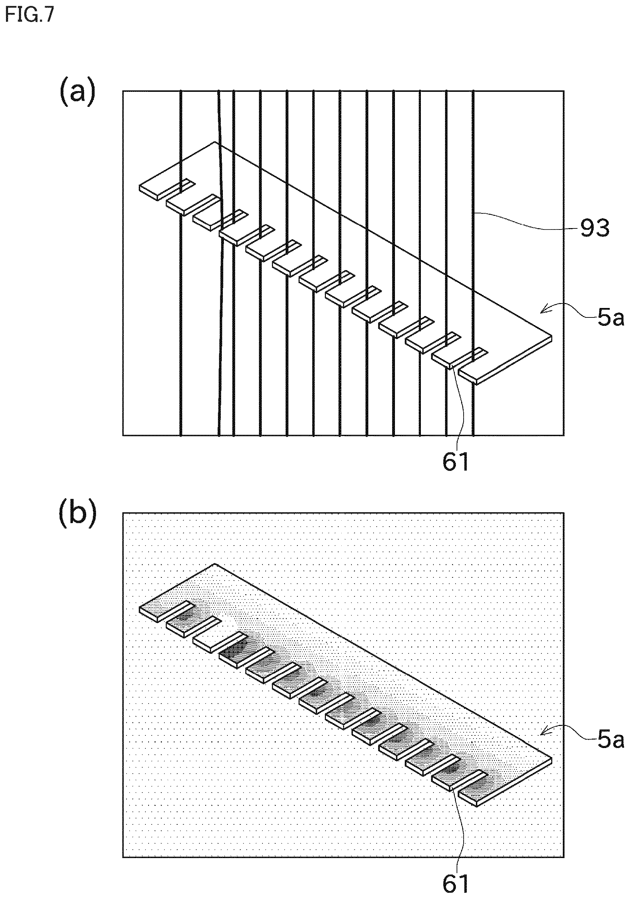

On the other hand, FIG. 7(a) shows a state of the yarn path region and the first yarn guide 5a when the yarn path is abnormal. FIG. 7(a) shows a state where two yarns 93 are inserted into one guide groove 61 and guided, and no yarn 93 is inserted into the other guide groove 61. In other words, a yarn 93 is erroneously guided to an adjacent guide groove 61, and therefore the yarn path is abnormal. The thermal image generated in this state is shown in FIG. 7(b). In FIG. 7(b), the temperature around the guide groove 61 with the two yarns 93 is higher than the temperature of the other guide grooves 61. Furthermore, the temperature around the guide groove 61 in which no yarn 93 is inserted is lower than the temperature of the other guide grooves 61. In this way, the abnormality in the yarn path clearly appears in a thermal image. Since the yarns 93 are generally thin, it is difficult to accurately specify the yarns 93 using a visible image. However, since the frictional heat generated between the yarns 93 and the guide grooves 61 spreads to the surrounding area, a thermal image can be used to accurately detect an abnormality in the yarn path (specifically, an abnormality regarding whether or not the yarns 93 are in the guide grooves 61, or an abnormality regarding whether or not the yarns 93 have deviated from the normal yarn path during production).

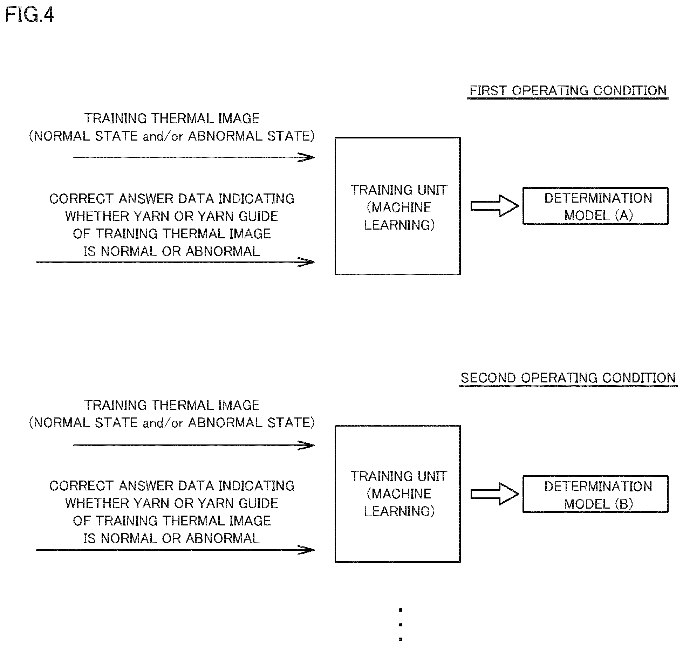

FIG. 4 conceptually shows processing for the training unit 50b to construct a determination model using machine learning. As shown in FIG. 4, a training thermal image and its correct answer data are used as training data for constructing a determination model. The training thermal image is a thermal image generated by capturing an image of the yarn path region including the first yarn guide 5a, and is a thermal image used as training data. In this embodiment, the image capture device 6 is used to generate a training thermal image. However, a device other than the image capture device 6 may also be used to generate the training thermal image.

The training data is data in which a training thermal image and correct answer data (label) indicating whether the yarn path shown in the training thermal image is normal or abnormal are associated with each other. As training data, only thermal images with normal yarn paths, only thermal images with abnormal yarn paths, or both may be used. It is preferable that the training data includes a plurality of training thermal images. For example, it is easy to capture a thermal image of a normal yarn path (that is, it is easy to prepare learning data). Capturing a thermal image of an abnormal yarn path is time-consuming because it is necessary to intentionally create a state where the yarn path is abnormal, but by learning this, it is possible to accurately determine whether or not the same type of abnormality has occurred.

Since the training thermal image is used for machine learning together with the correct answer data, the machine learning of this embodiment is supervised learning. Although the specific method for performing machine learning is optional, deep learning is used in this embodiment. As a result, the training unit 50b can extract features for determining an abnormality in a yarn path from a thermal image by extracting or estimating a training thermal image and the features in the thermal image that indicate whether the yarn path is normal or abnormal. For example, when learning a plurality of training thermal images in which the yarn path is normal, a feature in the thermal images that is held in common among the plurality of training thermal images is learned. This feature is, for example, a feature such as the temperature of all of the guide grooves 61 being uniform and/or the maximum temperature of the first yarn guide 5a being high due to the fact that the yarn 93 is in each guide groove 61 of the first yarn guide 5a. Also, when learning a plurality of training thermal images in which the yarn path is abnormal, a feature in the thermal images that is held in common among the plurality of learning thermal images is learned. This feature is, for example, a feature such as the temperature being low and/or the maximum temperature of the first yarn guide 5a being low because the yarn 93 is not in a guide groove 61 of the first yarn guide 5a. Through the above, the training unit 50b constructs a determination model. The determination model constructed by the training unit 50b is stored in the storage unit 50d.

The determination model described above is an example, and the determination model may be constructed using another method. That is, instead of deep learning, machine learning may be performed by designating a feature amount relating to an abnormality in the yarn path. Also, as described above, machine learning may be performed by directly using the thermal image generated by capturing an image of the yarn path region, and machine learning may be performed after performing some kind of pre-processing on the thermal image generated by capturing an image of the yarn path region. As the pre-processing, for example, image adjustment performed so that the yarn 93 appears clearly in the thermal image, deletion of objects other than the yarn 93 and the first yarn guide 5a, or the like are conceivable.

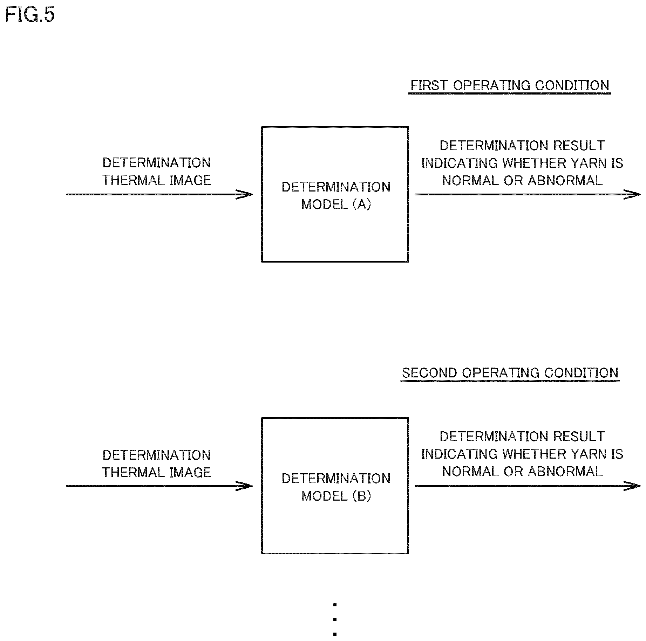

As shown in FIG. 5, at the stage of determining whether or not there is an abnormality in the yarn path, the determination unit 50c performs the following processing using the determination model. That is, the determination model determines whether or not there is an abnormality in the yarn path based on the thermal image generated by the image capture device 6. In the following description, the thermal image captured by the image capture device 6 at the stage of determining whether or not there is an abnormality in the yarn path will be referred to as a "determination thermal image". As described above, the determination model is constructed by learning features in images that indicate whether the yarn path is normal or abnormal. For this reason, the determination model determines whether the yarn path is normal or abnormal based on whether or not the thermal image for determination has these features, or the like.

Note that even when an abnormality other than an abnormality in the yarn path is to be detected, the same processing as in the case where an abnormality in the yarn path is to be detected may be performed. Hereinafter, it will be described that an abnormality other than an abnormality in the yarn path can be determined based on a thermal image.

When the yarn tension of the yarn 93 is significantly high, the force exerted between the yarn 93 and the first yarn guide 5a becomes large, and therefore the frictional heat increases and the temperature of the guide groove 61 tends to rise. Accordingly, an abnormality in the yarn tension of the yarn 93 can be detected using the thermal image. For example, machine learning may be performed on training data in which a thermal image captured in a normal state where the yarn tension is within a normal range and correct answer data indicating that the yarn tension is normal are associated with each other. Alternatively, machine learning may be performed on training data in which a thermal image captured in an abnormal state in which the yarn tension is out of the normal range and correct answer data indicating that the yarn tension is abnormal are associated with each other.

Also, if the amount of oil applied to the yarns 93 is too small, the coefficient of friction between the yarns 93 and the first yarn guide 5a increases, and therefore the frictional heat increases and the temperature of the guide groove 61 tends to rise. Accordingly, an abnormality in the amount of oil applied to the yarns 93 can be detected using a thermal image. For example, machine learning may be performed on training data in which a thermal image captured in a normal state in which the amount of oil applied is within a normal range and correct answer data indicating that the amount of oil applied is normal are associated with each other. Alternatively, machine learning may be performed on training data in which a thermal image captured in an abnormal state in which the amount of oil applied is out of the normal range and correct answer data indicating that the amount of oil applied is abnormal are associated with each other.

Also, as wear of the first yarn guide 5a progresses, the coefficient of friction of the first yarn guide 5a increases, and therefore the temperature of the guide groove 61 tends to increase. Accordingly, an abnormality in the wear of the first yarn guide 5a can be detected using a thermal image. For example, machine learning may be performed on training data in which a thermal image captured in a normal state where the first yarn guide 5a is not worn and correct answer data indicating that the first yarn guide 5a is not worn are associated with each other. Alternatively, machine learning may be performed on training data in which a thermal image captured in an abnormal state in which the first yarn guide 5a is worn and correct answer data indicating that the first yarn guide 5a is worn are associated with each other.

The determination model is created to be able to determine one of the above-mentioned abnormalities. However, the determination model may also be created so as to be able to determine a plurality of abnormalities among the above-mentioned abnormalities. In this case, the determination model may determine only whether or not at least one of the plurality of abnormalities to be determined has occurred (that is, it does not determine which abnormality has occurred). Alternatively, the determination model may determine also which abnormality has occurred among the abnormalities to be determined (in this case, it is necessary to learn thermal images according to individual abnormal states).

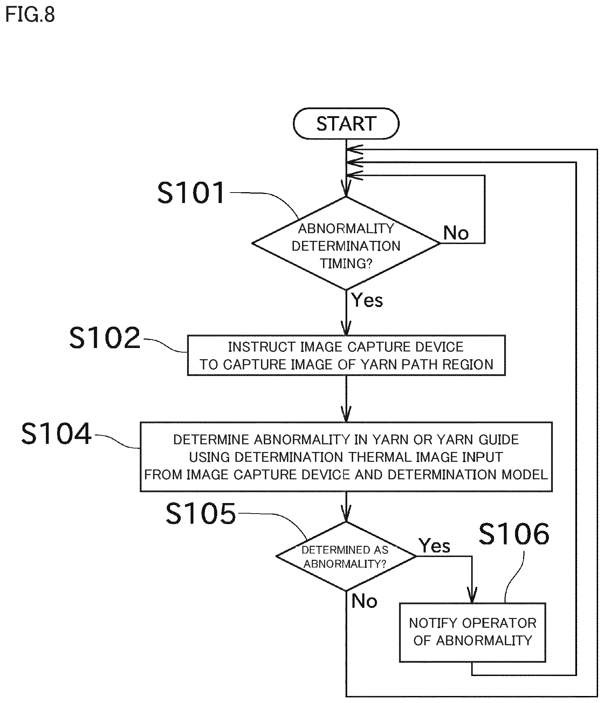

Next, the abnormality determination performed by the control device 50 will be described with reference mainly to FIG. 8.

The control device 50 determines whether or not the timing for abnormality determination of the yarns 93 has arrived (S101). The timing for abnormality determination of the yarns 93 is set, for example, at every predetermined amount of time while the yarns 93 are being wound. Note that this is an example, and different settings may be made as shown below. For example, the timing for abnormality determination of the yarns 93 may be set only at the start of winding the yarn 93. Alternatively, the timing may be set such that the timing for abnormality determination of the yarns 93 is reached when there is an instruction from an operator.

When the control unit 50a of the control device 50 determines that the timing for abnormality determination of the yarns 93 has arrived, the control unit 50a instructs the image capture device 6 to capture an image of the yarn path region (S102). Next, the determination unit 50c determines whether or not there is an abnormality regarding the yarns 93, as described above, based on the determination model selected by the control device 50 and the determination thermal image that was captured by the image capture device 6 and input to the input unit 50e (S104).

If the determination unit 50c does not determine that there is an abnormality regarding the yarns 93 (S105), the control device 50 performs the processing of step S101 again. If the determination unit 50c determines that there is an abnormality regarding the yarns 93 (S105), the control unit 50a of the control device 50 controls the notification unit 65 to notify the operator of the abnormality (S106).

By repeatedly performing the above processing, the control device 50 determines whether or not the yarns 93 are abnormal. In particular, by performing detection using a determination model constructed through machine learning, the determination accuracy can be increased.

In this embodiment, the image capture device 6 captures an image of the first yarn guide 5a to generate a determination thermal image. Alternatively, the image capture device 6 may capture an image of the oil supply guide 3, the second yarn guide 5b, the third yarn guides 5c, or the traverse guide 23 to generate a determination thermal image. Also, the number of yarn guides to be determined may be one or more.

In the following, for convenience of description, when no particular distinction is made between the first yarn guide 5a, the second yarn guide 5b, and the third yarn guide 5c, the first yarn guide 5a, the second yarn guide 5b, or the third yarn guide 5c is referred to as a "yarn guide 5".

In this embodiment, the determination unit 50c determines whether or not there is an abnormality by using a determination thermal image of the yarn path region. However, in addition to the determination thermal image, the determination unit 50c may also use a determination visible image of the yarn path region to determine whether or not there is an abnormality. Specifically, a visible light camera is prepared and arranged so that its lens faces the yarn path region (specifically, the region including the first yarn guide 5a). In particular, it is preferable that the visible light camera has an angle of view close to that of the image capture device 6. The visible light camera captures an image of the yarn path region, generates a determination visible image, and outputs the generated image to the control unit 50a.

As shown in FIG. 6(b), in the determination thermal image, the temperature at the contact points between the yarns 93 and the guide grooves 61 is the highest. Also, when the yarn path is normal, the yarns 93 pass through predetermined regions of the guide grooves 61. The predetermined regions can be specified from design information. As described above, by using the position of the first yarn guide 5a (in particular, the positions of the guide grooves 61) and the information on the predetermined regions obtained from the determination visible image, it is possible to specify the positions through which the yarns 93 pass when the yarn path is normal in the determination visible image. By applying this information to the determination thermal image, it is possible to identify regions where a high temperature is likely to occur when the yarn path is normal. For example, by comparing the region with the highest temperature in the determination thermal image when the yarn path is normal (the regions where the yarns 93 and the guide grooves 61 are in contact in the determination thermal image) and the actual temperature distribution in the determination thermal image, it is possible to more accurately determine whether or not the yarn path is normal.

B. Hardware Configuration of Control Device 50

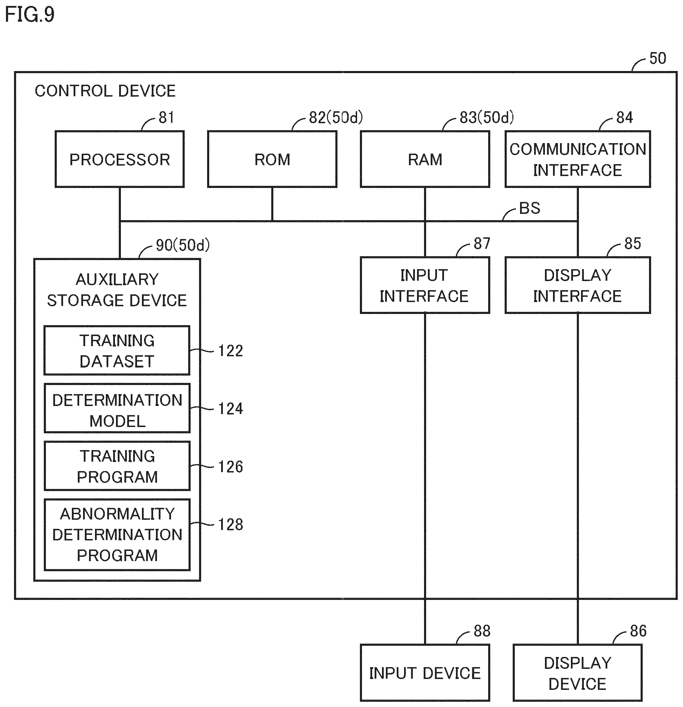

Next, with reference to FIG. 9, the hardware configuration of the control device 50 shown in FIG. 3 will be described. FIG. 9 is a diagram showing an example of a hardware configuration of the control device 50.

The control device 50 includes the above-described storage unit 50d (see FIG. 3), a processor 81, a communication interface 84, a display interface 85, and an input interface 87. These components are connected to the bus BS. Examples of the storage unit 50d include a ROM (Read Only Memory) 82, a RAM 83, and an auxiliary storage device 90.

The processor 81 is constituted, for example, by at least one integrated circuit. An integrated circuit can be constituted by, for example, at least one CPU, at least one GPU (Graphics Processing Unit), at least one ASIC (Application Specific Integrated Circuit), at least one FPGA (Field Programmable Gate Array), or a combination thereof.

The processor 81 controls the operation of the control device 50 by executing various programs. The processor 81 reads out a program to be executed from the auxiliary storage device 90 or the ROM 82 to the RAM 83 based on receiving execution instructions for various programs. The RAM 83 functions as working memory and temporarily stores various types of data necessary for program execution.

A LAN (Local Area Network), an antenna, and the like are connected to the communication interface 84. The control device 50 exchanges data with an external device via the communication interface 84. The external device includes, for example, a server.

A display device 86 is connected to the display interface 85. The display interface 85 sends an image signal for displaying an image to the display device 86 according to instructions from the processor 81 and the like. The display device 86 is, for example, a liquid crystal display, an organic EL (Electro Luminescence) display, or another display. Note that the display device 86 may also be formed integrally with the control device 50, or may be formed separately from the control device 50.

The input device 88 is connected to the input interface 87. The input device 88 is, for example, a mouse, keyboard, touch panel, or other device capable of receiving a user operation. Note that the input device 88 may be formed integrally with the control device 50 or may be formed separately from the control device 50.

The auxiliary storage device 90 is, for example, a storage medium such as a hard disk, flash memory, and SSD. The auxiliary storage device 90 stores, for example, a training dataset 122, a determination model 124, a training program 126, and an abnormality determination program 128. These storage locations are not limited to the auxiliary storage device 90, and may also be stored in the storage region of the processor 81 (e.g., cache memory, etc.), the ROM 82, the RAM 83, an external device (e.g., a server), or the like.

The training program 126 is a program for generating the determination model 124 using the training dataset 122. The training program 126 may be provided not as a standalone program but as a part of any program. In this case, the training processing performed by the training program 126 is realized in cooperation with any program. Even a program that does not include such a part of the module does not deviate from the training program 126 according to this embodiment. Furthermore, some or all of the functions provided by the training program 126 may also be realized by dedicated hardware. Furthermore, the control device 50 may also be included in a form such as a so-called cloud service in which at least one server executes a part of the processing of the training program 126.

The abnormality determination program 128 is a program for determining whether or not an abnormality has occurred regarding the yarns passing through the yarn guide 5, using the trained determination model 124. The abnormality determination program 128 may be provided not as a standalone program but as a part of any program. In this case, the determination processing performed by the abnormality determination program 128 is realized in cooperation with any program. Even if the program does not include such a part of the module, it does not deviate from the abnormality determination program 128 according to this embodiment. Furthermore, some of all of the functions provided by the abnormality determination program 128 may also be realized by dedicated hardware. Furthermore, the control device 50 may also be configured in a mode such as a so-called cloud service in which at least one server executes a part of the processing of the abnormality determination program 128.

C. Training Dataset 122

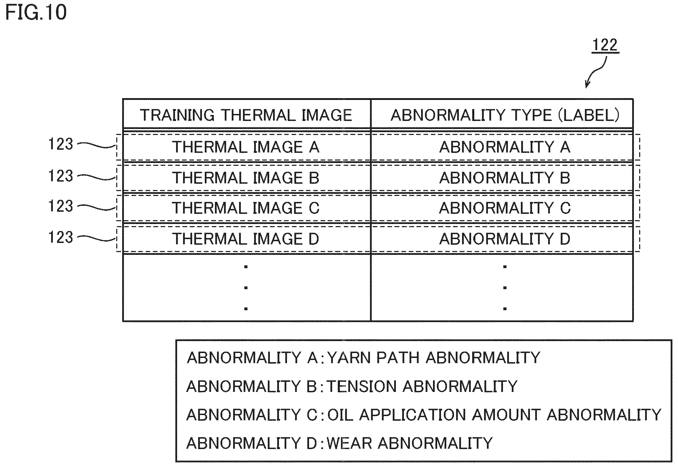

Next, with reference to FIG. 10, the training dataset 122 used to generate the determination model 124 shown in FIG. 9 will be described. FIG. 10 is a diagram showing an example of the training dataset 122.

The training dataset 122 includes a plurality of pieces of the training data 123. The number of pieces of the training data 123 included in the training dataset 122 is optional. As an example, the number of pieces of the training data 123 is from several tens to hundreds of thousands.

Each piece of the training data 123 associates, as a label (correct answer value), the type of abnormality regarding the yarns passing through the yarn guide, with respect to a thermal image showing the distribution of surface temperature of the yarn guide 5 described above. Note that the training data 123 may be acquired from one spinning take-up machine 1 or from another spinning take-up machine different from the spinning take-up machine 1.

The number of types of labels defined in the training dataset 122 may be one or more. In the example of FIG. 10, abnormalities "A" to "D" are shown as labels indicating the types of abnormalities. The abnormality "A" indicates a yarn path abnormality indicating that a yarn 93 is out of the normal yarn path region on the yarn guide 5. The abnormality "B" indicates a tension abnormality indicating that the tension of a yarn 93 passing through the yarn guide 5 is out of the normal range. The abnormality "C" indicates an oil application amount abnormality indicating that the amount of oil applied to a yarn 93 passing through the yarn guide 5 is out of the normal range. The abnormality "D" indicates a wear abnormality indicating that the amount of wear of the yarn guide 5 is out of the normal range. Note that a label indicating normality may also be associated with the thermal image.

D. Functional Configuration of Control Device 50

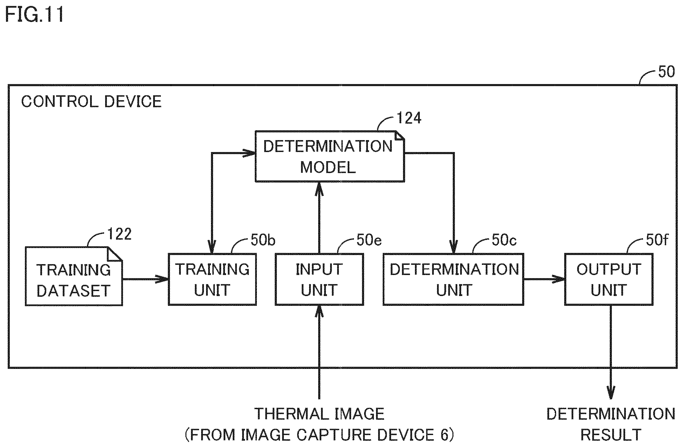

Next, a functional configuration of the control device 50 will be described with reference to FIGS. 11 to 13. FIG. 11 is a diagram showing an example of the functional configuration of the control device 50.

As shown in FIG. 11, the control device 50 includes a training unit 50b, a determination unit 50c, an input unit 50e, and an output unit 50f as functional configurations. Hereinafter, these functional configurations will be described in the order of the training unit 50b, the input unit 50e, the determination unit 50c, and the output unit 50f.

D1. Training Unit 50b

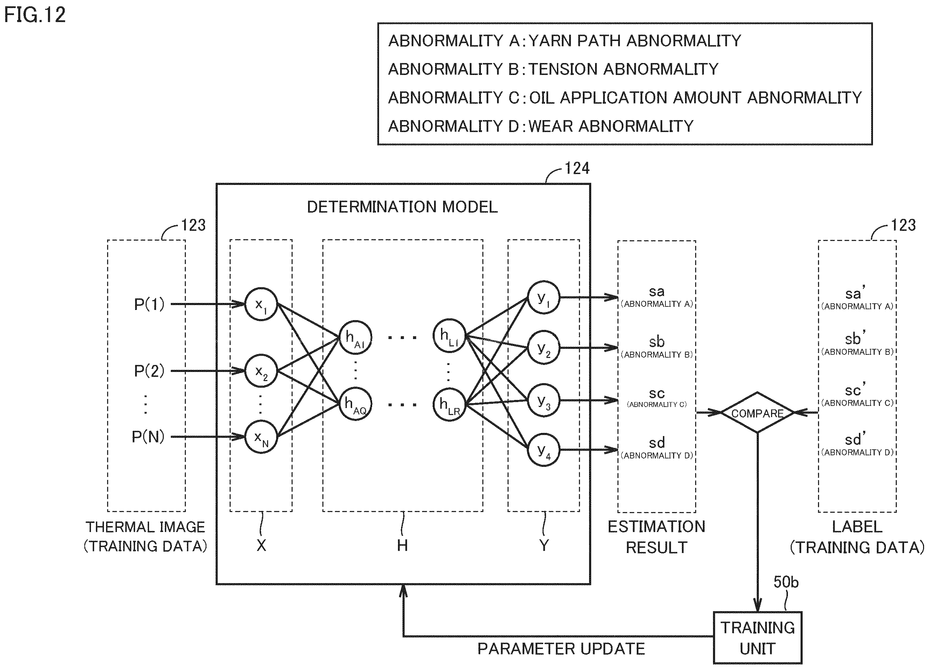

First, with reference to FIG. 12, the training unit 50b shown in FIG. 11 will be described. FIG. 12 is a diagram conceptually showing the training processing performed by the training unit 50b.

The training unit 50b executes training processing using the above-described training dataset 122 (see FIG. 10), and generates a determination model 124 for determining whether or not an abnormality has occurred in the yarns 93 passing through the yarn guide 5. The machine learning algorithm employed in the training processing is not particularly limited, and for example, deep learning, a convolutional neural network (CNN), a full-layer convolutional neural network (FCN), a support vector machine, or the like may be employed. Hereinafter, training processing using deep learning will be described.

As shown in FIG. 12, the determination model 124 is constituted by an input layer X, an intermediate layer H, and an output layer Y.

The input layer X is configured to receive input of a thermal image, which is the training data 123. The input layer X is composed of, for example, N units $x_1$ to $x_N$ (N is a natural number). The number of units constituting the input layer X is the same as the number of dimensions of input information.

As an example, if the number of pixels of the thermal image is N pixels and each pixel of the thermal image is input as-is to the input layer X, the input layer X is composed of N units. As another example, feature amounts extracted from a thermal image may be input to the input layer X. In this case, the input layer X is configured such that the number of units thereof is the same as the number of dimensions of the feature amount. Each unit included in the input layer X outputs input data to each unit in the first layer of the intermediate layer H.

The intermediate layer H is composed of one layer or multiple layers. In the example of FIG. 12, the intermediate layer H is composed of L layers (L is a natural number). Each layer of the intermediate layer H includes multiple units. The number of units in each layer of the intermediate layer H may be the same or different. In the example of FIG. 12, the first layer of the intermediate layer H is composed of Q units $h_{A1}$ to $h_{AQ}$ (Q is a natural number). Also, the final layer of the intermediate layer H is composed of R units $h_{L1}$ to $h_{LR}$ (R is a natural number).

Each unit constituting each layer of the intermediate layer H is connected to each unit of the previous layer and each unit of the next layer. Each unit of each layer receives an output value from each unit of the previous layer, multiplies each output value by a weight, integrates the multiplication results, adds (or subtracts) a predetermined bias to the integration result, inputs the addition result (or subtraction result) to a predetermined function (e.g., a sigmoid function), and outputs the output value of the function to each unit of the next layer.

The output layer Y outputs the estimation result according to the input thermal image. The output layer Y is composed of units $y_1$ to $y_4$, for example. Hereinafter, the units $y_1$ to $y_4$ are also referred to as units y.

Each of the units y is connected to the units $h_{L1}$ to $h_{LR}$ of the final layer of the intermediate layer H. Each unit y receives the output value from each unit of the final layer of the intermediate layer H, multiplies each output value by a weight, integrates the multiplication results, adds (or subtracts) a predetermined bias to the integration result, inputs the addition result (or subtraction result) to a predetermined function (e.g., a sigmoid function), and outputs the output result of the function as an output value.

The number of units constituting the output layer Y is determined according to the number of abnormality types defined in the training data 123. As an example, when detecting the abnormalities "A" to "D", the number of units constituting the output layer Y is four, namely the units $y_1$ to $y_4$. In this case, the unit $y_1$ is configured to output a score "sa" indicating the likelihood that an abnormality "A" has occurred. The unit $y_2$ is configured to output a score "sb" indicating the likelihood that an abnormality "B" has occurred. The unit $y_3$ is configured to output a score "sc" indicating the likelihood that an abnormality "C" has occurred. The unit $y_4$ is configured to output a score "sd" indicating the likelihood that an abnormality "D" has occurred.

Note that in the example of FIG. 12, one determination model 124 is configured to output a plurality of scores, but one determination model may also be configured to output one score. As an example, a first determination model may be configured to output the score "sa" relating to the abnormality "A", a second determination model may be configured to output the score "sb" relating to the abnormality "B", a third determination model may be configured to output the score "sc" relating to the abnormality "C" and a fourth determination model may be configured to output the score "sd" relating to the abnormality "D".

Next, processing for updating internal parameters of the determination model 124, performed by the training unit 50b will be described.

The training unit 50b inputs the thermal image specified in the first piece of training data 123 to the determination model 124. Next, the training unit 50b compares the estimation results "sa" to "sd" output from the determination model 124 and the correct answer scores "sa'" to "sd'" according to the abnormality type associated with the first piece of training data 123.

As an example, if the abnormality type associated with the training data 123 is the abnormality "A", the correct answer score is (sa', sb', sc', sd')=(1,0,0,0). If the abnormality type associated with the training data 123 is the abnormality "B", the correct answer score is (sa', sb', sc', sd')=(0,1,0,0). If the abnormality type associated with the training data 123 is the abnormality "C", the correct answer score is (sa', sb', sc', sd')=(0,0,1,0). If the abnormality type associated with the training data 123 is the abnormality "D", the correct answer score is (sa', sb', sc', sd')=(0,0,0,1).

The training unit 50b calculates an error "Z" between the output results "sa" to "sd" of the determination model 124 and the correct scores "sa'" to "sd'". The error "Z" is calculated based on the following equation (1), for example.

$$Z=\{(sa-sa')^2+(sb-sb')^2+(sc-sc')^2+(sd-sd')^2\}/4 \quad ...(1)$$

Next, the training unit 50b updates various parameters (e.g., weights and biases) included in the determination model 124 such that the error "Z" becomes smaller. The updating of the parameters is realized, for example, through error backpropagation.

As described above, the training unit 50b inputs the thermal image included in the training data 123 to the determination model 124, and updates the internal parameters of the determination model 124 such that the estimation result output from the determination model 124 approaches the type of abnormality serving as the label associated with the thermal image. The training unit 50b repeatedly performs processing for updating the internal parameters of the determination model 124 for each piece of training data 123 included in the training dataset 122. As a result, the determination model 124 outputs more accurate estimation results as learning progresses.

Note that the training unit 50b does not need to use all of the training data 123 included in the training dataset 122 for the training processing, but may use some of the training data 123 included in the training dataset 122 to generate the determination model 124. The remaining training data 123 is used, for example, to evaluate the determination model 124.

D2. Input Unit 50e

Next, the function of the input unit 50e shown in FIG. 11 will be described.

The input unit 50e is a communication module for realizing communication with the image capture device 6 described above. The control device 50 and the image capture device 6 may be communicatively connected by wire or wirelessly.

The input unit 50e acquires a determination thermal image from the image capture device 6 by outputting an image capture instruction to the image capture device 6, and inputs the determination thermal image to the determination model 124. At this time, the input unit 50e may input each pixel of the determination thermal image to the determination model 124 as-is, or may input the feature amount extracted from the determination thermal image to the determination model 124. As a result, the determination model 124 outputs a score indicating the likelihood that an abnormality has occurred in the yarns 93 passing through the yarn guide 5 as the type of abnormality.

D3. Determination Unit 50c

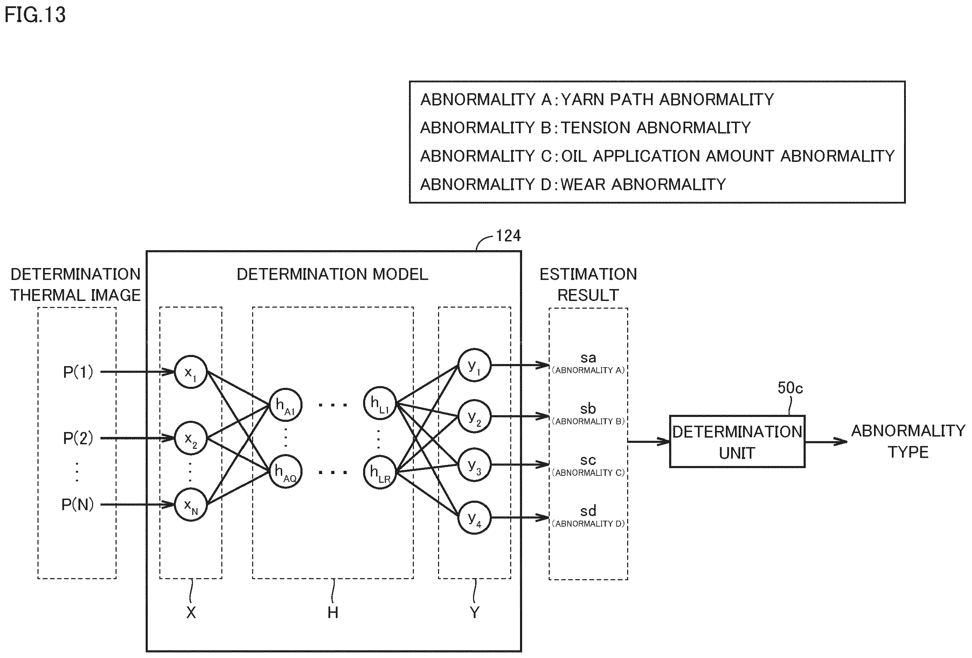

Next, with reference to FIG. 13, the function of the determination unit 50c shown in FIG. 11 will be described. FIG. 13 is a diagram conceptually showing abnormality determination processing performed by the determination unit 50c.

As shown in FIG. 13, the determination model 124 outputs, as estimation results, the score "sa" indicating the likelihood that the abnormality "A" has occurred, the score "sb" indicating the likelihood that the abnormality "B" has occurred, the score "sc" indicating the likelihood that the abnormality "C" has occurred, and the score "sd" indicating the likelihood that the abnormality "D" has occurred. The determination unit 50c determines the type of abnormality that has occurred based on the scores "sa", "sb", "sc", and "sd".

If the score "sa" exceeds a first threshold, the determination unit 50c determines that the abnormality "A" has occurred. The first threshold may be set in advance or may be set as appropriate by the user.

If the score "sb" exceeds a second threshold, the determination unit 50c determines that the abnormality "B" has occurred. The second threshold may be set in advance or may be set as appropriate by the user. Also, the second threshold may be the same as the first threshold or may be different from the first threshold.

The determination unit 50c determines that the abnormality "C" has occurred when the score "sc" exceeds a third threshold. The third threshold may be set in advance or may be set as appropriate by the user. Also, the third threshold may be the same as the first and second thresholds, or may be different from the first and second thresholds.

The determination unit 50c determines that the abnormality "D" has occurred when the score "sd" exceeds the fourth threshold. The fourth threshold may be set in advance or may be set as appropriate by the user. Also, the fourth threshold may be the same as the first to third thresholds, or may be different from the first to third thresholds.

If the determination unit 50c determines that the score "sa" is less than or equal to the first threshold, the score "sb" is less than or equal to the second threshold, the score "sc" is less than or equal to the third threshold, and the score "sd" is less than or equal to the fourth threshold, the determination unit 50c determines that no abnormality has occurred. That is, in this case, the determination unit 50c determines that the yarn 93 is passing through the yarn guide 5 normally.

D4. Output Unit 50f

Next, the function of the output unit 50f shown in FIG. 11 will be described.

The output unit 50f outputs a control command corresponding to the determination result obtained by the determination unit 50c to a predetermined output destination.

In one aspect, the output unit 50f outputs a warning display command to the above-described display device 86 (see FIG. 9). As a result, the display device 86 displays a warning indicating that an abnormality has occurred in the yarn guide 5. The warning displayed on the display device 86 includes, for example, the type of abnormality that has occurred and a determination thermal image indicating the abnormality. Note that the warning display command may also be transmitted to a communication terminal registered in advance. This allows the person in charge or manager to recognize that an abnormality has occurred in the yarn guide 5 in the spinning take-up machine 1.

In another aspect, the output unit 50f outputs a warning notification command to the above-mentioned notification unit 65 (see FIG. 3). As a result, the notification unit 65 serving as a notification lamp emits light according to the type of abnormality that has occurred. Also, the notification unit 65 serving as a notification buzzer emits a sound according to the type of abnormality that has occurred.

As an example, when the determination result indicates normality, the output unit 50f lights the notification lamp in green. Also, when the determination result indicates a yarn path abnormality, the output unit 50f causes the notification lamp to blink in red. Furthermore, if the determination result indicates an abnormality in the amount of oil applied, the output unit 50f causes the notification lamp to blink in red. Furthermore, if the determination result indicates a tension abnormality, the output unit 50f causes the notification lamp to blink in yellow. If the determination result indicates abnormal wear of the yarn guide 5, the output unit 50f lights the notification lamp in yellow.

Also, if the determination result indicates an abnormality in the yarn path, an abnormality in the amount of oil applied, an abnormality in tension, or an abnormality in wear, the output unit 50f may cause the notification buzzer to perform notification of an abnormal state. Preferably, the output unit 50f causes the notification buzzer to output a sound corresponding to the type of abnormality.

Furthermore, the output unit 50f may output a notification indicating that an abnormality has occurred if the determination result indicates an abnormality in the yarn path, an abnormality in the amount of oil applied, an abnormality in tension, or an abnormality in wear. The notification may be displayed on the display device 86 described above, or may be transmitted to an external device. The content included in the notification includes, for example, the identifier of the spinning take-up machine in which the abnormality has occurred (e.g., the machine ID) and the type of the abnormality in which the abnormality has occurred.

In yet another aspect, the output unit 50f outputs a log storage command to the above-mentioned storage unit 50d (see FIG. 3). As a result, the storage unit 50d stores a log corresponding to the type of abnormality that has occurred. As an example, the log includes the time when the abnormality occurred, the type of abnormality that has occurred, and a determination thermal image showing the abnormality.

E. First Modified Example

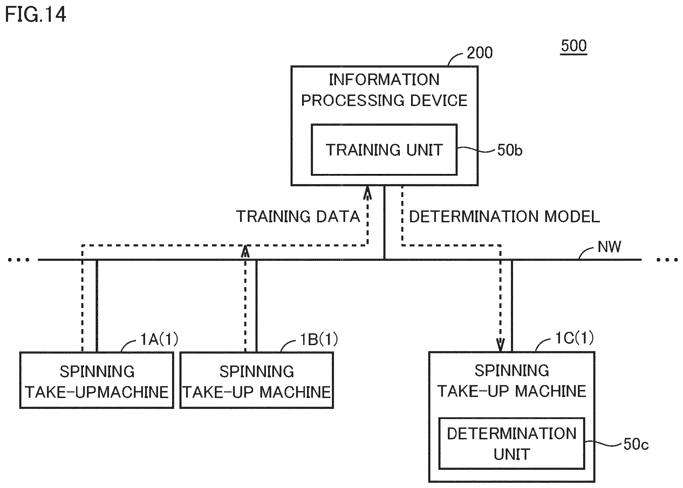

Next, a first modified example of the above-described embodiment will be described with reference to FIG. 14. Note that in the following description, members that are the same or similar to those in the above-described embodiments are denoted by the same reference numerals in the drawings, and description thereof is omitted in some cases.

In the example of FIG. 11 described above, the training unit 50b and the determination unit 50c are installed in the same spinning take-up machine 1. However, the training unit 50b and the determination unit 50c do not necessarily need to be installed in the same spinning take-up machine 1. As an example, the training unit 50b may be implemented in a different device.

FIG. 14 is a diagram showing an example of the device configuration of an abnormality determination system 500 in this modified example. As shown in FIG. 14, the abnormality determination system 500 includes one or more spinning take-up machines 1 and one or more information processing devices 200. In the example of FIG. 14, the abnormality determination system 500 includes three spinning take-up machines 1A to 1C and one information processing device 200.

The spinning take-up machines 1A to 1C and the information processing device 200 are connected to the same network NW and are configured to be able to communicate with each other. The spinning take-up machine 1 and the information processing device 200 may be communicatively connected by wire or wirelessly.

The information processing device 200 is a desktop computer, a laptop computer, a tablet terminal, or other information processing terminal.

In the example of FIG. 14, the training unit 50b is installed in the information processing device 200. Also, the determination unit 50c is installed in the spinning take-up machine 1C.

The information processing device 200 collects the above-mentioned training data 123 (see FIG. 10) from the spinning take-up machines 1 (e.g., the spinning take-up machines 1A, 1B) connected to the network NW. Next, the training unit 50b of the information processing device 200 executes training processing using the training data 123 collected from all of the spinning take-up machines 1, and generates the above-described determination model 124. Since the functions of the training unit 50b are as described above, the description thereof will not be repeated.

Thereafter, the information processing device 200 transmits the generated determination model 124 to the spinning take-up machine 1 (for example, the spinning take-up machine 1C). The determination unit 50c uses the determination model 124 to determine whether or not an abnormality has occurred in the yarn guide 5 in the spinning take-up machine 1C. Since the function of the determination unit 50c is as described above, the description thereof will not be repeated.

## F. Second Modified Example

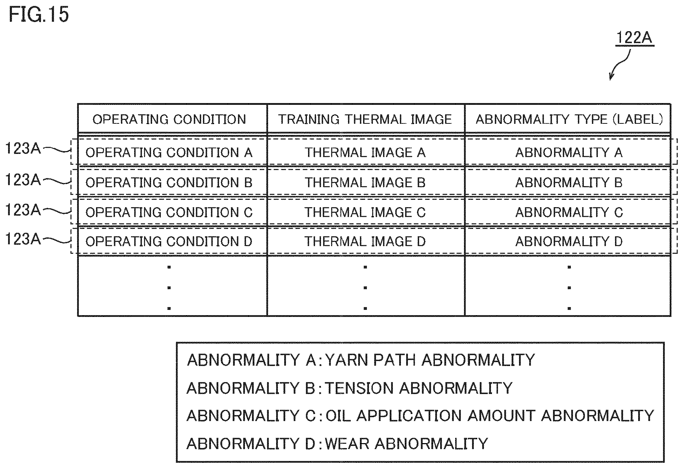

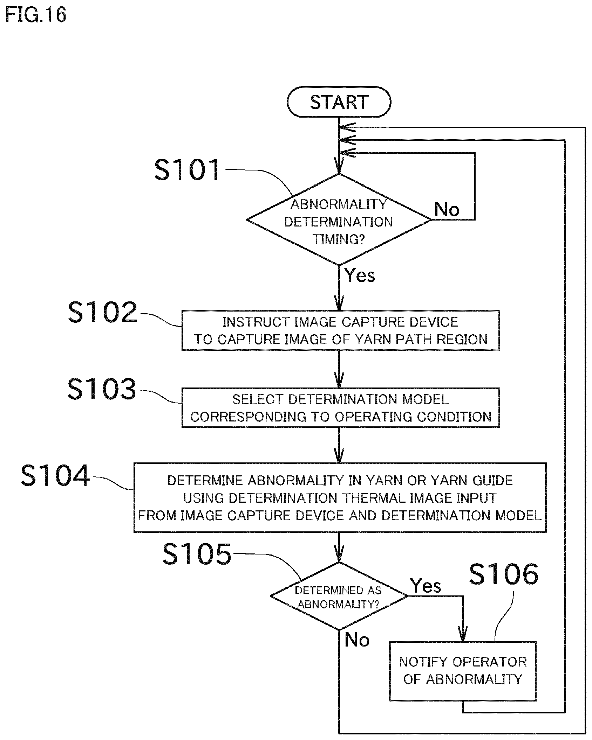

Next, a second modified example of the above-described embodiment will be described with reference to FIGS. 15 and 16.

The heat (temperature) generated by friction between the yarns 93 and the first yarn guide 5a varies depending on the operating condition of the spinning take-up machine 1. For example, as the traveling speed of the yarns 93 increases, the temperature of the first yarn guide 5a tends to increase. Also, since the coefficient of friction changes depending on the material of the yarns 93, the temperature of the first yarn guide 5a changes.

In view of this, in this modified example, the above-described determination model 124 is created for each operating condition of the spinning take-up machine 1. However, it is not essential to create a determination model for each operating condition, and one determination model may also be used regardless of the operating condition.

### F1. Training Processing

First, with reference to FIG. 15, training processing according to this modified example will be described. FIG. 15 is a diagram showing an example of a training dataset 122A according to this modified example.

The training dataset 122A includes a plurality of pieces of training data 123A. The number of pieces of training data 123A included in the training dataset 122A is optional. As an example, the number of pieces of training data 123Ais from several tens to hundreds of thousands.

In the training data 123 shown in FIG. 10 described above, the abnormality type relating to the yarns 93 was associated with the thermal image showing the distribution of the surface temperature of the yarn guide 5 as a label (correct answer value). In contrast, in the training data 123A according to this modified example, the operating condition of the spinning take-up machine 1 or other spinning take-up machine is further associated with the training thermal image. The operating condition includes, for example, the travel speed of the yarn 93, the material of the yarns 93, and the like.

The training unit 50b described above classifies the training data 123Aincluded in the training dataset 122A for each group of operating conditions that are similar. Any method can be adopted as the classification method. As an example, the training data 123A is classified by clustering. The number of classes (number of classifications) may be set in advance or may be automatically determined.

The clustering method is not particularly limited, and any method that can classify similar operating conditions may be used. For example, clustering methods include hierarchical methods and non-hierarchical methods. Examples of hierarchical clustering methods include a method of sequentially linking two points that are close to each other in a space indicated by an index including at least one of the travel speed of the yarns 93 and the material of the yarns 93, and performing the linking until the distance exceeds a predetermined value. Also, examples of non-hierarchical clustering methods include the k-means method.

The training unit 50b executes the above-described training processing for each set of pieces of the training data 123A belonging to the same class. The training processing is as described above with reference to FIG. 12, and therefore the description thereof will not be repeated. As a result of the training processing, the determination models 124 are generated for corresponding operating condition ranges of the spinning take-up machine 1. Each of the determination models 124 is stored with an operating condition range associated therewith.

### F2. Determination Processing

Next, with reference to FIG. 16, determination processing according to this modified example will be described. FIG. 16 is a diagram showing a flowchart relating to determination processing according to this modified example.

In the flowchart shown in FIG. 16, compared to the flowchart shown in FIG. 8, the processing of step S103 has been added. Other points are as described in FIG. 8, and therefore the description thereof will not be repeated.

In step S103, the determination unit 50c described above acquires the current operating condition of the spinning take-up machine 1. The operating condition includes, for example, the travel speed of the yarns 93, the material of the yarns 93, and the like. The operating condition is input to the above-mentioned input unit 50e, for example.

Next, the determination unit 50c acquires the determination model 124 corresponding to the current operating condition of the spinning take-up machine 1 from among the determination models 124 generated by the training unit 50b. More specifically, the determination unit 50c specifies the operating condition range to which the current operating condition belongs from among the operating condition ranges associated with each of the determination models 124, and selects the determination model 124 corresponding to the operating condition range. Thereafter, the determination unit 50c uses the selected determination model 124 to execute the above-described abnormality determination processing. The abnormality determination processing performed by the determination unit 50c is as described above with reference to FIG. 13, and therefore the description thereof will not be repeated.

F3. Other

Note that although an example in which the determination models 124 are generated for each group of operating conditions that are similar has been described above, there is no limitation to this way of using the operating condition of the spinning take-up machine 1. As one example, the above-described training unit 50b executes the training processing using not only the thermal image included in the training data 123A but also the operating condition. In this case, the determination model 124 is configured to accept not only input of thermal images but also input of the operating condition. Next, the input unit 50e described above inputs not only the determination thermal image but also the current operating condition of the spinning take-up machine 1 to the determination model 124. As a result, the determination model 124 more accurately outputs a score indicating the likelihood that an abnormality has occurred in the yarn 93 passing through the yarn guide 5.

G. Third Modified Example

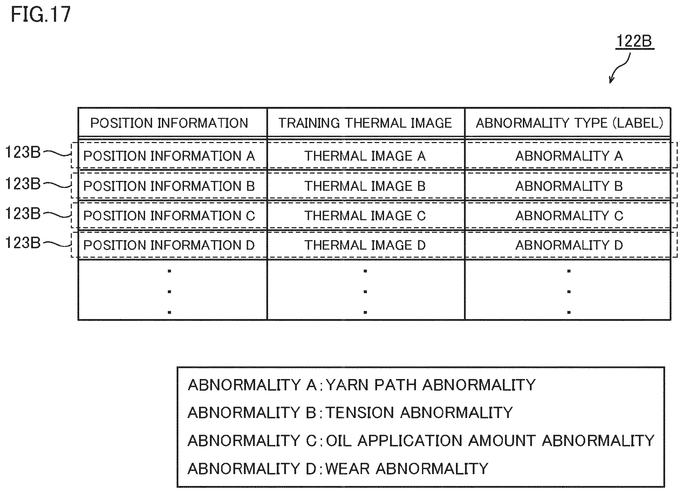

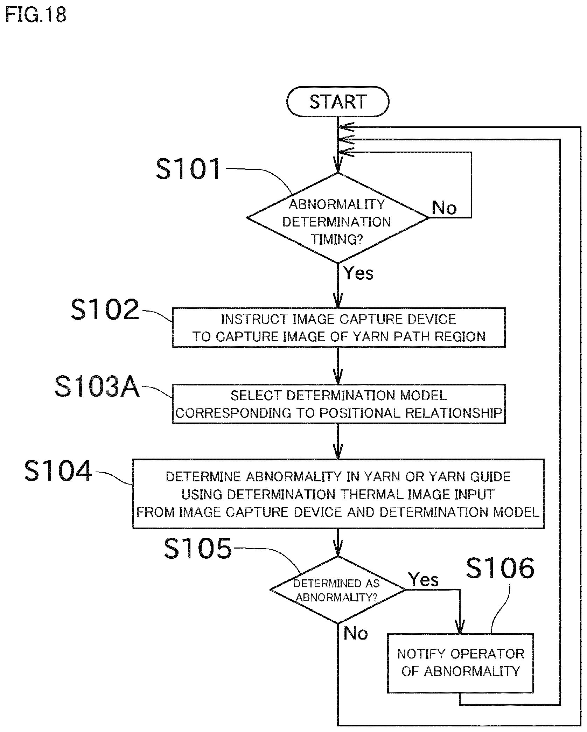

Next, a third modified example of the above-described embodiment will be described with reference to FIGS. 17 and 18.

In FIGS. 15 and 16 described above, an example was described in which the determination models 124 are generated for each group of operating conditions that are similar, but the determination models 124 may also be generated for each group of pieces of information other than the operating conditions. As an example, the determination models 124 may also be generated for corresponding image capture conditions of the yarn guide 5 by the image capture device 6. The image capture conditions include, for example, the relative positional relationship of the image capture device 6 with respect to the yarn guide 5.

Hereinafter, an example in which the determination models 124 are generated for corresponding relative positional relationships between the image capture device 6 and the yarn guide 5 will be described.

G1. Training Processing

First, with reference to FIG. 17, training processing according to this modified example will be described. FIG. 17 is a diagram showing an example of the training dataset 122B according to this modified example.

The training dataset 122B includes a plurality of pieces of training data 123B. The number of pieces of training data 123B included in the training dataset 122B is optional. As an example, the number of pieces of training data 123B is from several tens to hundreds of thousands.

In the training data 123 shown in FIG. 10 described above, the abnormality type relating to the yarns 93 was associated with the thermal image showing the distribution of the surface temperature of the yarn guide 5 as a label (correct answer value). In contrast, in the training data 123B according to this modified example, information indicating the positional relationship between the yarn guide 5 and the image capture device 6 is further associated with the training thermal image. The positional relationship is defined, for example, by at least one of the relative coordinate values of the image capture device 6 with respect to the yarn guide 5 and the angle of view of the image capture device 6 with respect to the yarn guide 5. The above-mentioned positional relationship included in the training data 123 may be the positional relationship between the yarn guide 5 and the image capture device 6 provided in the spinning take-up machine 1, or the positional relationship between the yarn guide 5 and the image capture device 6 provided in a type of device other than the spinning take-up machine 1.

The training unit 50b described above classifies the training data 123B included in the training dataset 122B for each group of positional relationships that are similar. Any method can be adopted as the classification method. As an example, the training data 123B is classified by clustering. The number of classes (number of classifications) may be set in advance or may be automatically determined.

The clustering method is not particularly limited, and any method that can classify similar positional relationships may be used. For example, clustering methods include hierarchical methods and non-hierarchical methods. Examples of hierarchical clustering methods include a method of sequentially linking two points that are close to each other in a space indicated by an index including at least one of the relative coordinate values of the image capture device 6 with respect to the yarn guide 5 and the angle of view of the image capture device 6 with respect to the yarn guide 5, and performing the linking until the distance exceeds a predetermined value. Also, examples of non-hierarchical clustering methods include the k-means method.

The training unit 50b executes the above-described training processing for each set of pieces of the training data 123B belonging to the same class. The training processing is as described above with reference to FIG. 12, and therefore the description thereof will not be repeated. As a result of the training processing, the determination models 124 are generated for corresponding positional relationships that are similar. Each of the determination models 124 is stored with a positional relationship associated therewith.

G2. Determination Processing

Next, with reference to FIG. 18, determination processing according to this modified example will be described. FIG. 18 is a diagram showing a flowchart relating to determination processing according to this modified example.

In the flowchart shown in FIG. 18, compared to the flowchart shown in FIG. 8, the processing of step S103A has been added. Other points are as described in FIG. 8, and therefore the description thereof will not be repeated.

In step S103A, the determination unit 50c described above obtains the positional relationship between the yarn guide 5 and the image capture device 6. The positional relationship may be set in advance or may be input by the user. The positional relationship is input to, for example, the above-mentioned input unit 50e. Hereinafter, the positional relationship between the yarn guide 5 and the image capture device 6 will also be referred to as the "input positional relationship".

Next, the determination unit 50c obtains a determination model 124 corresponding to the input positional relationship from among the determination models 124 generated by the training unit 50b. More specifically, the determination unit 50c specifies the positional relationship to which the input positional relationship belongs from among the positional relationships associated with each of the determination models 124, and selects the determination model 124 corresponding to the positional relationship. Thereafter, the determination unit 50c uses the selected determination model 124 to execute the above-described abnormality determination processing. The abnormality determination processing performed by the determination unit 50c is as described above with reference to FIG. 13, and therefore the description thereof will not be repeated.

G3. Other

Note that although the example in which the determination model 124 is generated for each group of positional relationships that are similar has been described above, there is no limitation to this way of using the positional relationship. As an example, the above-mentioned training unit 50b executes the training processing using not only the thermal image included in the training data 123B but also the above-mentioned positional relationship. **In** this case, the determination model 124 is configured to accept not only input of a thermal image but also input of the above-mentioned positional relationship. Next, the input unit 50e described above inputs not only the determination thermal image but also the positional relationship between the yarn guide 5 and the image capture device 6 to the determination model 124. As a result, the determination model 124 more accurately outputs a score indicating the likelihood that an abnormality has occurred in the yarn 93 passing through the yarn guide 5.

H. Fourth Modified Example

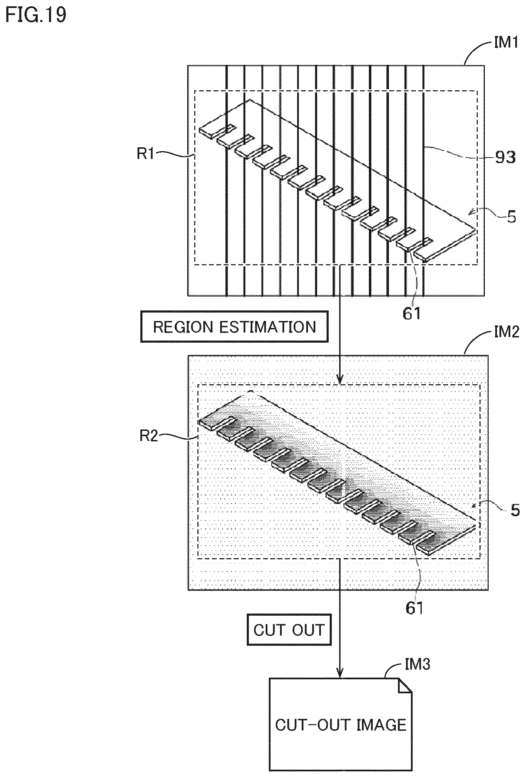

Next, a fourth modified example of the above-described embodiment will be described with reference to FIG. 19. FIG. 19 is a diagram schematically showing cutout processing according to this modified example.

If the relative positional relationship between the yarn guide 5 and the image capture device 6 has been determined, the position of the yarn guide 5 shown in the thermal image is also fixed. In this case, the control device 50 can improve learning accuracy and determination accuracy by cutting out a predetermined region within the thermal image and using image information of the cutout region for training processing and determination processing. However, the position of the image capture device 6 with respect to the yarn guide 5 may change depending on the model of the spinning take-up machine 1. In view of this, the control device 50 according to this modified example first specifies the region of the yarn guide 5 in the thermal image.

More specifically, inside the spinning take-up machine 1, a visible light camera (not shown) is provided in addition to the image capture device 6 serving as a thermal camera. The visible light camera is installed inside the spinning take-up machine 1 so that its image capture field of view includes the yarn guide 5. Preferably, the visible light camera is provided adjacent to the image capture device 6. Also, the angle formed by the optical axis of the visible light camera and the optical axis of the image capture device 6 is less than or equal to a predetermined angle (for example, less than or equal to 10°). As an example, the predetermined angle is 0°. In this case, the optical axis of the visible light camera is parallel to the optical axis of the image capture device 6.

FIG. 19 shows a visible image IM1 obtained from the visible light camera and a thermal image IM2 obtained from the image capture device 6. The control device 50 specifies an image region R1 in which the yarn guide 5 appears from the visible image IM1 using a predetermined object detection algorithm. Any known algorithm may be employed as the object detection algorithm.

Next, the control device 50 specifies an image region R2 in which the yarn guide 5 appears in the thermal image IM2 based on the position of the image region R1 in the visible image IM1. At this time, if the positional relationship between the image capture device 6 and the visible light camera is known, the position of the image region R2 in the thermal image IM2 can be specified based on the position of the image region R1 in the visible image IM1. As an example, if the image capture device 6 and the visible light camera are installed at substantially the same position, the control device 50 makes the position of the image region R2 in the thermal image IM2 the same as the position of the image region R1 in the visible image IM1. In another aspect, the control device 50 projectively transforms the image region R1 in the visible image IM1 based on a predetermined projection matrix, and specifies the region resulting from the projective transformation as the image region R2 in the thermal image IM2. Note that the projection matrix is determined in advance based on the positional relationship between the visible light camera and the image capture device 6.

Thereafter, the control device 50 cuts out the image region R2 within the thermal image IM2 and generates a cutout image IM3. The cutout image IM3 can be used for training processing performed by the training unit 50b described above. Also, the cutout image IM3 can be used in the determination processing performed by the determination unit 50c described above.

I. Fifth Modified Example

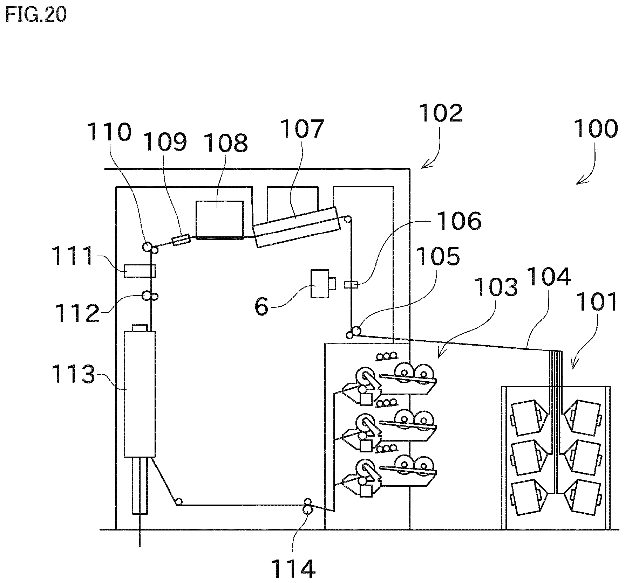

Next, with reference to FIG. 20, a fifth modified example of the above-described embodiment will be described. FIG. 20 is a side view of the false-twisting machine (synthetic fiber manufacturing equipment) 100.

The false-twisting machine 100 processes synthetic yarns 104. As shown in FIG. 20, the false-twisting machine 100 includes a yarn feeding portion 101, a processing portion 102, and a winding portion 103.

The yarn feeding portion 101 includes a mechanism for holding a plurality of packages obtained by winding the synthetic yarns 104. The yarn feeding portion 101 supplies a plurality of synthetic yarns 104 to be processed by the processing portion 102 to the processing portion 102.

The processing portion 102 performs false-twisting on the synthetic yarns 104. The processing portion 102 includes, in order from the upstream side in the travel direction of the synthetic yarns 104: a first feed roller 105, a yarn guide 106, a first heating device 107, a cooling device 108, a false-twisting device 109, a second feed roller 110, a yarn combining device 111, a third feed roller 112, a second processing device 113, and a fourth feed roller 114.

The first feed roller 105 is constituted by opposing rollers, and rotates while sandwiching the plurality of synthetic yarns 104, thereby pulling out the synthetic yarns 104 from the plurality of packages in the yarn feeding portion 101, respectively. The yarn guide 106 individually guides each of the plurality of synthetic yarns 104 pulled out by the first feed roller 105. The first heating device 107 includes, for example, a heater, and heats the plurality of synthetic yarns 104. Also, inside the first heating device 107, a yarn guide (not shown) is provided. The cooling device 108 cools the plurality of synthetic yarns 104 using, for example, airflow. Also, inside the cooling device 108, a yarn guide (not shown) is provided. The false-twisting device 109 performs false-twisting on the plurality of synthetic yarns 104. The second feed roller 110 draws out the plurality of synthetic yarns 104 that have undergone false-twisting by the false-twisting device 109. The yarn combining device 111 combines two synthetic yarns 104 together. The third feed roller 112 draws out the plurality of synthetic yarns 104 that have been combined by the yarn combining device 111. The second processing device 113 heats the plurality of synthetic yarns 104 again. The fourth feed roller 114 pulls out the plurality of synthetic yarns 104 that were heated by the second processing device 113.

The winding portion 103 winds each of the plurality of synthetic yarns 104 drawn out by the fourth feed roller 114 to manufacture a plurality of packages.

Near the yarn guide 106, an image capture device 6 similar to that of the above-described embodiment is arranged. The image capture device 6 is arranged so that its lens faces the yarn guide 106, and captures an image of the yarn guide 106 to generate a determination thermal image. Since relatively high yarn tension is applied to the synthetic yarns 104 near the yarn guide 106, high frictional heat is likely to be generated. Accordingly, by performing the same processing as in the above-described embodiment based on the thermal image of the yarn guide 106, abnormalities in the yarn path can be detected.

The image capture device 6 may also capture an image of a part other than the yarn guide 106 to generate a determination thermal image. For example, a determination thermal image may also be generated by capturing an image of a yarn guide inside the first heating device 107, a yarn guide inside the cooling device 108, a traverse guide provided in the winding portion 103, or the like.

## J. Summary

As described above, the control device 50 of this embodiment includes the input unit 50e, the determination unit 50c, and the output unit 50f. A thermal image including a yarn path region that is a part of the first yarn guide 5a (yarn guide 106; the same applies below) included in the spinning take-up machine 1 (or the false-twisting machine 100; the same applies below) is input to the input unit 50e (input step, input means). The determination unit 50c determines whether or not there is an abnormality regarding the yarn 93 based on the thermal image input to the input unit 50e (determination step, determination means). The output unit 50f outputs the determination result of the determination unit 50c (output step, output means). Also, the control device 50 performs an abnormality determination method including an input step, a determination step, and an output step. Also, the storage unit 50d of the control device 50 stores an abnormality determination program for causing the control device 50 to function as input means, determination means, and output means.

The friction state occurring in the first yarn guide 5a is different depending on whether the yarn 93 is normal or abnormal, and therefore the temperature of the first yarn guide 5a is different depending on whether the yarn 93 is normal or abnormal. Also, even if the yarn 93 is so thin that it is difficult to detect the yarn 93 itself, the frictional heat spreads, and therefore the yarn 93 can be indirectly detected using a thermal image. As described above, abnormalities regarding the yarn 93 can be determined with high accuracy based on the thermal image including the yarn path region that is a part of the first yarn guide 5a.

In the control device 50 of this embodiment, the determination unit 50c determines whether or not there is an abnormality in the yarn path based on the thermal image input to the input unit 50e.

If the yarn path is abnormal, the temperature of the first yarn guide 5a changes, and therefore it is possible to accurately determine whether or not there is an abnormality in the yarn path.

In the control device 50 of this embodiment, the determination unit 50c determines whether or not there is an abnormality in the yarn tension based on the thermal image input to the input unit 50e.

If the yarn tension is abnormal, the temperature of the first yarn guide 5a changes, and therefore it is possible to accurately determine whether or not there is an abnormality in the yarn tension.

In the control device 50 of this embodiment, the determination unit 50c determines whether or not there is an abnormality in the amount of oil applied to the yarns 93 based on the thermal image input to the input unit 50e.

If the amount of oil applied to the yarns 93 is abnormal, the temperature of the first yarn guide 5a changes, and therefore it is possible to accurately determine whether or not there is an abnormality in the amount of oil applied to the yarns 93.

The control device 50 of this embodiment stores a plurality of determination models corresponding to an operating condition. The determination unit 50c determines whether or not there is an abnormality regarding the yarns 93 based on the determination model selected according to the current operating condition and the thermal image input to the input unit 50e.

Since the temperature that can occur in the first yarn guide 5a changes depending on the operating condition, abnormalities regarding the yarns 93 can be determined with high accuracy by using a determination model that corresponds to the operating condition.

In the control device 50 of this embodiment, the thermal image input to the input unit 50e is captured by the image capture device 6.

As a result, a thermal image including the yarn path region can be acquired and used to determine abnormalities regarding the yarns 93.

The control device 50 of this embodiment outputs the result of determination of abnormalities regarding the yarns 93 of the spinning take-up machine 1 serving as synthetic fiber manufacturing equipment.

The control device 50 of the above-mentioned other embodiment outputs the result of determination of abnormality in the synthetic yarns 104 of the false-twisting machine 100 serving as synthetic fiber manufacturing equipment.

As a result, it is possible to determine an abnormality regarding the yarns 93 (or synthetic yarns 104) of the spinning take-up machine 1 (or false-twisting machine 100).

In the control device 50 of this embodiment, the determination model is constructed by performing machine learning using, as training data, a training thermal image generated by capturing an image of a yarn path region in advance. The determination model is a model for determining whether or not the yarns 93 are abnormal.

Although the preferred embodiments of the present invention have been described above, the above configuration can be modified as follows, for example.

In the embodiment described above, the determination unit 50c determines abnormalities regarding the yarns 93 using the determination thermal image and the determination model. This processing may also be performed using two models. That is, when creating the determination model, the training unit 50b constructs a first determination model using, as training data, the training thermal image and correct answer data indicating the temperature determination location (specifically, the location where the yarns 93 and the first yarn guide 5a are in contact with each other in a normal state, and the vicinity thereof). Next, the training unit 50b constructs a second determination model using, as training data, the temperature distribution at the temperature determination location and the correct answer data indicating whether or not the yarns 93 or the first yarn guide 5a is abnormal. Then, at the time of determination, the determination unit 50c determines the range of the temperature determination location based on the determination thermal image and the first determination model. Next, the determination unit 50c determines whether or not the yarns 93 or the first yarn guide 5a is abnormal based on the range of the temperature determination location and the second determination model, and outputs the determination result.

The flowchart shown in the above-described embodiment is an example, and some processing may be omitted, the contents of some processing may be changed, or new processing may be added. For example, in the flowchart of FIG. 16, the image capture device 6 captures an image of the yarn path region when there is an instruction from the control device 50, but the image capture device 6 may also spontaneously capture an image of the yarn path region at predetermined time intervals and output the determination heat image to the control device 50.

I. Supplementary Notes

As described above, this embodiment includes the following disclosures.

The problem to be solved by the present invention is as described above, and next, a means for solving this problem and effects thereof will be described.

According to a first aspect of the present invention, an abnormality determination device having the following configuration is provided. That is, the abnormality determination device includes an input unit, a determination unit, and an output unit. A thermal image including a yarn path region that is a part of a yarn guide included in synthetic fiber manufacturing equipment is input to the input unit. The determination unit determines whether or not there is an abnormality regarding the yarn based on the thermal image input to the input unit. The output unit outputs the determination result of the determination unit.

Since the friction state occurring in the yarn guide is different depending on whether the yarn is normal or abnormal, the temperature of the yarn guide is different depending on whether the yarn is normal or abnormal. Also, even if the yarn is so thin that it is difficult to detect the yarn itself, the frictional heat spreads, and therefore the yarn can be detected indirectly using a thermal image. As described above, it is possible to accurately determine abnormalities regarding the yarn based on a thermal image including the yarn path region that is a part of the yarn guide.

In the abnormality determination device, it is preferable that the determination unit determines whether or not there is an abnormality in the yarn path based on the thermal image input to the input unit.

If the yarn path is abnormal, the temperature of the yarn guide changes, and therefore it is possible to accurately determine whether there is an abnormality in the yarn path.

In the abnormality determination device, it is preferable that the determination unit determines whether or not there is an abnormality in the yarn tension based on the thermal image input to the input unit.

If the yarn tension is abnormal, the temperature of the yarn guide changes, and therefore it is possible to accurately determine whether or not there is an abnormality in the yarn tension.

In the abnormality determination device, it is preferable that the determination unit determines whether or not there is an abnormality in the amount of oil applied to the yarn based on the thermal image input to the input unit.

If the amount of oil applied to the yarn is abnormal, the temperature of the yarn guide changes, and therefore it is possible to accurately determine an abnormality in the amount of oil applied.

The abnormality determination device described above preferably has the following configuration. That is, the abnormality determination device includes a plurality of the determination models corresponding to operating conditions. The determination unit determines whether or not there is an abnormality regarding the yarn based on the determination model selected according to the current operating condition and the thermal image input to the input unit.

Since the temperature that can occur in the yarn guide changes according to the operating condition, abnormalities regarding the yarn can be determined with high accuracy by using a determination model that corresponds to the operating condition.

In the above-described abnormality determination device, it is preferable that the thermal image input to the input unit is captured by an image capture device.

Accordingly, a thermal image including the yarn path region can be acquired and used to determine abnormalities regarding the yarn.

In the abnormality determination device, it is preferable to output a result of determination of abnormality regarding the yarn of the spinning take-up machine serving as the synthetic fiber manufacturing equipment.

In the abnormality determination device, it is preferable to output a result of determination of abnormality regarding the yarn of a false-twisting machine serving as the synthetic fiber manufacturing equipment.

As a result, it is possible to determine an abnormality regarding the yarns in the spinning take-up machine or the false-twisting machine.

According to a second aspect of the present invention, the following abnormality determination method is provided. That is, the abnormality determination method includes an input step, a determination step, and an output step. In the input step, a thermal image including a yarn path region that is a part of a yarn guide included in synthetic fiber manufacturing equipment is input. In the determination step, it is determined whether or not there is an abnormality regarding the yarn based on the thermal image input in the input step. In the output step, the determination result in the determination step is output.

According to a third aspect of the present invention, an abnormality determination program for causing a computer to function as the following means is provided. The means include an input means, a determination means, and an output means. The input means receives input of a thermal image including a yarn path region that is a part of a yarn guide provided in synthetic fiber manufacturing equipment. The determination means determines whether or not there is an abnormality regarding the yarn based on the thermal image input by the input means. The output means outputs the determination result of the determination means.

The embodiments disclosed herein are to be considered illustrative in all respects and not restrictive. The scope of the present invention is indicated not by the above description but by the claims, and all changes within the scope and meanings equivalent to the claims are intended to be included therein.

LIST OF REFERENCE NUMERALS

1       Spinning take-up machine (synthetic fiber manufacturing equipment)
5a      First yarn guide (yarn guide)
6       Image capture device
9       Yarn winding machine
50      Control device
50a     Control unit
50b     Training unit
50c     Determination unit
50d     Storage unit
100     False-twisting machine (synthetic fiber manufacturing equipment)
106     Yarn guide

**Claims**

1. An abnormality determination device, comprising:

   an input unit (50e) configured to receive input of a thermal image including a yarn path region, which is a part of a yarn guide (5a) included in synthetic fiber manufacturing equipment;
   a determination unit (50c) configured to determine whether or not there is an abnormality regarding a yarn (93) based on the thermal image input to the input unit (50e); and
   an output unit (50f) configured to output a determination result of the determination unit (50c).

2. The abnormality determination device according to claim 1,

   wherein the determination unit (50c) determines whether or not there is the abnormality based on the thermal image for determination input to the input unit (50e) and a determination model (124) generated by performing machine learning on a plurality of pieces of training data (123), and
   each of the plurality of pieces of training data (123) associates, as a label, whether or not there is the abnormality regarding the yarn (93) passing through the yarn guide (5a) with a thermal image for training in which the yarn guide (5a) included in the synthetic fiber manufacturing equipment or other synthetic fiber manufacturing equipment appears.

3. The abnormality determination device according to claim 2,
   each of the plurality of pieces of training data (123) associates, as the label, a type of the abnormality.

4. The abnormality determination device according to claim 2 or 3, further comprising
   a training unit (50b) configured to generate the determination model (124) from the plurality of pieces of training data (123).

5. The abnormality determination device according to any one of claims 2 to 4,

wherein the synthetic fiber manufacturing equipment further includes an image capture device configured to be capable of capturing an image of the yarn guide (5a),
the thermal image to be input to the input unit (50e) is acquired from the image capture device,
the abnormality determination device includes a plurality of the trained determination models (124) for corresponding positional relationships between the yarn guide and the image capture device included in the synthetic fiber manufacturing equipment or the other synthetic fiber manufacturing equipment, and
the determination unit (50c)

selects the determination model (124) corresponding to a positional relationship between the yarn guide (5a) and the image capture device included in the synthetic fiber manufacturing equipment from among the plurality of determination models (124), and
determines whether or not there is the abnormality based on the selected determination model (124) and the thermal image for determination input to the input unit (50e).

6. The abnormality determination device according to any one of claims 1 to 4,

wherein the synthetic fiber manufacturing equipment further includes an image capture device configured to be capable of capturing an image of the yarn guide (5a), and
the thermal image to be input to the input unit (50e) is acquired from the image capture device.

7. The abnormality determination device according to any one of claims 1 to 6,
wherein the abnormality includes an abnormality in a yarn path.

8. The abnormality determination device according to any one of claims 1 to 7,
wherein the abnormality includes an abnormality in yarn tension.

9. The abnormality determination device according to any one of claims 1 to 8,
wherein the abnormality includes an abnormality in an amount of oil applied to the yarn (93).

10. The abnormality determination device according to any one of claims 2 to 4,

wherein the abnormality determination device includes a plurality of the trained determination models (124) for corresponding operating conditions of the synthetic fiber manufacturing equipment that are similar, and
the determination unit (50c)

selects the determination model (124) corresponding to the current operating condition of the synthetic fiber manufacturing equipment from among the plurality of determination models (124), and
determines whether or not there is the abnormality based on the selected determination model (124) and the thermal image for determination input to the input unit (50e).

11. The abnormality determination device according to any one of claims 1 to 10,
wherein the synthetic fiber manufacturing equipment is a spinning take-up machine.

12. The abnormality determination device according to any one of claims 1 to 10,
wherein the synthetic fiber manufacturing equipment is a false-twisting machine.

13. A computer implemented abnormality determination method, comprising:

a step of inputting a thermal image including a yarn path region, which is a part of a yarn guide (5a) included in synthetic fiber manufacturing equipment;
a step of determining whether or not there is an abnormality regarding a yarn (93) based on the thermal image input in the step of inputting; and
a step of outputting a determination result of the step of determining.

**14.** The computer implemented abnormality determination method according to claim 13,

wherein in the step of determining, it is determined whether or not there is the abnormality based on the thermal image for determination input in the step of inputting and a determination model (124) generated by performing machine learning of a plurality of pieces of training data (123), and each of the plurality of pieces of training data (123) associates, as a label, whether or not there is the abnormality regarding the yarn (93) passing through the yarn guide (5a) with a thermal image for training in which the yarn guide (5a) included in the synthetic fiber manufacturing equipment or other synthetic fiber manufacturing equipment appears.

**15.** The computer implemented abnormality determination method according to claim 14, each of the plurality of pieces of training data (123) associates, as the label, a type of the abnormality.

**16.** The computer implemented abnormality determination method according to claim 14 or 15, further comprising a step of generating the determination model (124) from the plurality of pieces of training data (123).

**17.** The computer implemented abnormality determination method according to any one of claims 14 to 16, wherein

the synthetic fiber manufacturing equipment further includes an image capture device configured to be capable of capturing an image of the yarn guide (5a), the thermal image to be input in the step of inputting is acquired from the image capture device, and the computer implemented abnormality determination method further comprises a step of acquiring a plurality of the trained determination models (124) for corresponding positional relationships between the yarn guide and the image capture device included in the synthetic fiber manufacturing equipment or the other synthetic fiber manufacturing equipment, and the step of determining includes:

a step of selecting the determination model (124) corresponding to a positional relationship between the yarn guide (5a) and the image capture device included in the synthetic fiber manufacturing equipment from among the plurality of determination models (124), and a step of determining whether or not there is the abnormality based on the selected determination model (124) and the thermal image for determination input in the step of inputting.

**18.** The computer implemented abnormality determination method according to any one of claims 13 to 16,

wherein the synthetic fiber manufacturing equipment further includes an image capture device configured to be capable of capturing an image of the yarn guide (5a), and the thermal image to be input in the step of inputting is acquired from the image capture device.

**19.** The computer implemented abnormality determination method according to any one of claims 13 to 18, wherein the abnormality includes an abnormality in a yarn path.

**20.** The computer implemented abnormality determination method according to any one of claims 14 to 16, further comprising

a step of acquiring a plurality of the trained determination models (124) for corresponding operating conditions of the synthetic fiber manufacturing equipment that are similar, and the step of determining includes:

a step of selecting the determination model (124) corresponding to the current operating condition of the synthetic fiber manufacturing equipment from among the plurality of determination models (124); and a step of determining whether or not there is the abnormality based on the selected determination model (124) and the thermal image for determination input in the step of inputting.

**21.** An abnormality determination program for causing an abnormality determination device to execute:

a step of inputting a thermal image including a yarn path region, which is a part of a yarn guide (5a) included in synthetic fiber manufacturing equipment;

a step of determining whether or not there is an abnormality regarding a yarn (93) based on the thermal image input in the step of inputting; and

a step of outputting a determination result of the step of determining.

**22.** The abnormality determination program according to claim 21,

wherein in the step of determining, it is determined whether or not there is the abnormality based on the thermal image for determination input in the step of inputting and a determination model (124) generated by performing machine learning of a plurality of pieces of training data (123), and

each of the plurality of pieces of training data (123) associates, as a label, whether or not there is the abnormality regarding a yarn (93) passing through the yarn guide (5a) with a thermal image for training in which the yarn guide (5a) included in the synthetic fiber manufacturing equipment or other synthetic fiber manufacturing equipment appears.

**23.** The abnormality determination program according to claim 22,
each of the plurality of pieces of training data (123) associates, as the label, a type of the abnormality.

**24.** The abnormality determination program according to claim 22 or 23,
wherein the abnormality determination program further causes the abnormality determination device to execute a step of generating the determination model (124) from the plurality of pieces of training data (123).

**25.** The abnormality determination program according to any one of claims 22 to 24,

wherein the synthetic fiber manufacturing equipment further includes an image capture device configured to be capable of capturing an image of the yarn guide (5a),
the thermal image to be input in the step of inputting is acquired from the image capture device, and
the abnormality determination program further causes the abnormality device to execute a step of acquiring a plurality of the trained determination models (124) for corresponding positional relationships between the yarn guide and the image capture device included in the synthetic fiber manufacturing equipment or the other synthetic fiber manufacturing equipment, and
the step of determining includes:

a step of selecting the determination model (124) corresponding to a positional relationship between the yarn guide (5a) and the image capture device included in the synthetic fiber manufacturing equipment from among the plurality of determination models (124), and
a step of determining whether or not there is the abnormality based on the selected determination model (124) and the thermal image for determination input in the step of inputting.

**26.** The abnormality determination program according to any one of claims 21 to 24,

wherein the synthetic fiber manufacturing equipment further includes an image capture device configured to be capable of capturing an image of the yarn guide (5a), and
the thermal image to be input in the step of inputting is acquired from the image capture device.

**27.** The abnormality determination program according to any one of claims 21 to 26,
wherein the abnormality includes an abnormality in a yarn path.

**28.** The abnormality determination program according to any one of claims 22 to 24,

wherein the abnormality determination program further causes the abnormality determination device to execute a step of acquiring a plurality of the trained determination models (124) for corresponding operating conditions of the synthetic fiber manufacturing equipment that are similar, and
the step of determining includes:

a step of selecting the determination model (124) corresponding to the current operating condition of the synthetic fiber manufacturing equipment from among the plurality of determination models (124); and
a step of determining whether or not there is the abnormality based on the selected determination model (124) and the thermal image for determination input in the step of inputting.

**Patentansprüche**

1. Eine Anomaliebestimmungsvorrichtung, umfassend:

   eine Eingabeeinheit (50e), die konfiguriert ist, eine Eingabe eines Wärmebildes zu empfangen, das einen Garnlaufbereich umfasst, der ein Teil einer Garnführung (5a) ist, die in einer Synthesefaserherstellungsanlage enthalten ist;
   eine Bestimmungseinheit (50c), die konfiguriert ist, auf der Grundlage des in die Eingabeeinheit (50e) eingegebenen Wärmebildes zu bestimmen, ob eine Anomalie in Bezug auf ein Garn (93) vorliegt oder nicht; und
   eine Ausgabeeinheit (50f), die konfiguriert ist, ein Bestimmungsergebnis der Bestimmungseinheit (50c) auszugeben.

2. Die Anomaliebestimmungsvorrichtung gemäß Anspruch 1, wobei

   die Bestimmungseinheit (50c) auf der Grundlage des zur Bestimmung in die Eingabeeinheit (50e) eingegebenen Wärmebildes und eines Bestimmungsmodells (124), das durch maschinelles Lernen anhand einer Vielzahl von Trainingsdaten (123) erzeugt wurde, zu bestimmen, ob die Anomalie vorliegt oder nicht, und
   jedes der mehreren Trainingsdaten (123) als Label zuordnet, ob die Anomalie in Bezug auf das durch die Garnführung (5a) laufende Garn (93) vorliegt oder nicht, mit einem Trainings-Wärmebild, in dem die Garnführung (5a), die in der Synthesefaserherstellungsanlage oder einer anderen Synthesefaserherstellungsanlage enthalten ist, erscheint.

3. Die Anomaliebestimmungsvorrichtung gemäß Anspruch 2,
   jedes der mehreren Trainingsdaten (123) als Label eine Art der Anomalie zuordnet.

4. Die Anomaliebestimmungsvorrichtung gemäß Anspruch 2 oder 3, die ferner umfasst
   eine Trainingseinheit (50b), die konfiguriert ist, das Bestimmungsmodell (124) aus den mehreren Trainingsdaten (123) zu erzeugen.

5. Die Anomaliebestimmungsvorrichtung gemäß einem der Ansprüche 2 bis 4, wobei

   die Synthesefaserherstellungsanlage ferner eine Abbildungsvorrichtung umfasst, die konfiguriert ist, ein Bild der Garnführung (5a) aufnehmen zu können, wobei
   das in die Eingabeeinheit (50e) einzugebende Wärmebild von der Abbildungsvorrichtung erfasst wird,
   die Anomaliebestimmungsvorrichtung mehrere trainierte Bestimmungsmodelle (124) für entsprechende Positionsbeziehungen zwischen der Garnführung und der Abbildungsvorrichtung umfasst, die in der Synthesefaserherstellungsanlage oder der anderen Synthesefaserherstellungsanlage enthalten ist, und
   die Bestimmungseinheit (50c)

   wählt aus der Vielzahl von Bestimmungsmodellen (124) das Bestimmungsmodell (124) aus, das einer Positionsbeziehung zwischen der Garnführung (5a) und der in der Synthesefaserherstellungsanlage enthaltenen Abbildungsvorrichtung entspricht, und
   bestimmt, ob die Anomalie vorliegt oder nicht, basierend auf dem ausgewählten Bestimmungsmodell (124) und dem zur Bestimmung in die Eingabeeinheit (50e) eingegebenen Wärmebild.

6. Die Anomaliebestimmungsvorrichtung gemäß einem der Ansprüche 1 bis 4, wobei

   die Synthesefaserherstellungsanlage ferner eine Abbildungsvorrichtung umfasst, die konfiguriert ist, ein Bild der Garnführung (5a) aufnehmen zu können, und
   das in die Eingabeeinheit (50e) einzugebende Wärmebild von der Abbildungsvorrichtung erfasst wird.

7. Die Anomaliebestimmungsvorrichtung gemäß einem der Ansprüche 1 bis 6, wobei
   die Anomalie eine Anomalie im Garnverlauf umfasst.

8. Die Anomaliebestimmungsvorrichtung gemäß einem der Ansprüche 1 bis 7, wobei
   die Anomalie eine Anomalie in der Garnspannung umfasst.

9. Die Anomaliebestimmungsvorrichtung gemäß einem der Ansprüche 1 bis 8, wobei

die Anomalie eine Anomalie in der auf das Garn (93) aufgebrachten Ölmenge umfasst.

10. Die Anomaliebestimmungsvorrichtung gemäß einem der Ansprüche 2 bis 4, wobei

die Anomaliebestimmungsvorrichtung mehrere trainierte Bestimmungsmodelle (124) für ähnliche entsprechende Betriebsbedingungen der Synthesefaserherstellungsanlage umfasst, und
die Bestimmungseinheit (50c)

das Bestimmungsmodell (124) auswählt, das dem aktuellen Betriebszustand der Synthesefaserherstellungsanlage aus der Vielzahl von Bestimmungsmodellen (124) entspricht, und
auf der Grundlage des ausgewählten Bestimmungsmodells (124) und des zur Bestimmung an die Eingabeeinheit (50e) eingegebenen Wärmebildes bestimmt, ob die Anomalie vorliegt oder nicht.

11. Die Anomaliebestimmungsvorrichtung gemäß einem der Ansprüche 1 bis 10, wobei
die Synthesefaserherstellungsanlage eine Spinn-Aufwickelmaschine ist.

12. Die Anomaliebestimmungsvorrichtung gemäß einem der Ansprüche 1 bis 10, wobei
die Synthesefaserherstellungsanlage eine Falschzwirnmaschine ist.

13. Ein Computerimplementiertes Anomaliebestimmungsvorrichtung, umfassend:

einen Eingabeschritt eines Wärmebildes, das einen Garnlaufbereich umfasst, der ein Teil einer Garnführung (5a) ist, die in einer Synthesefaserherstellungsanlage enthalten ist;
einen Bestimmungsschritt, ob hinsichtlich eines Garns (93) eine Anomalie vorliegt, basierend auf dem im Eingabeschritt eingegebenen Wärmebild; und
einen Ausgabeschritt eines Bestimmungsergebnisses des Bestimmungsschritts.

14. Das computerimplementierte Anomaliebestimmungsverfahren gemäß Anspruch 13, wobei

im Bestimmungsschritt auf der Grundlage des im Eingabeschritt eingegebenen Wärmebildes zur Bestimmung und eines durch maschinelles Lernen einer Vielzahl von Trainingsdaten (123) erzeugten Bestimmungsmodells (124) bestimmt wird, ob die Anomalie vorliegt oder nicht, und
jedes der mehreren Trainingsdaten (123) als Label zuordnet, ob die Anomalie in Bezug auf das durch die Garnführung (5a) laufende Garn (93) vorliegt oder nicht, mit einem Trainings-Wärmebild, in dem die Garnführung (5a), die in der Synthesefaserherstellungsanlage oder einer anderen Synthesefaserherstellungsanlage enthalten ist, erscheint.

15. Das computerimplementierte Anomaliebestimmungsverfahren gemäß Anspruch 14, wobei
jedes der mehreren Trainingsdaten (123) als Label eine Art der Anomalie zuordnet.

16. Das computerimplementierte Anomaliebestimmungsverfahren gemäß Anspruch 14 oder 15, das ferner umfasst
einen Erzeugungsschritt des Bestimmungsmodells (124) aus der Vielzahl von Trainingsdaten (123).

17. Das computerimplementierte Anomaliebestimmungsverfahren gemäß einem der Ansprüche 14 bis 16, wobei

die Synthesefaserherstellungsanlage ferner eine Abbildungsvorrichtung umfasst, die konfiguriert ist, ein Bild der Garnführung (5a) aufnehmen zu können,
das im Eingabeschritt einzugebende Wärmebild von der Bildaufnahmevorrichtung erfasst wird, und
das computerimplementierte Anomaliebestimmungsverfahren ferner einen Erfassungsschritt einer Vielzahl der trainierten Bestimmungsmodelle (124) für entsprechende Positionsbeziehungen zwischen der Garnführung und der Abbildungsvorrichtung, die in der Synthesefaserherstellungsanlage oder der anderen Synthesefaserherstellungsanlage enthalten ist, umfasst, und
der Bestimmungsschritt umfasst:

einen Auswahlschritt des Bestimmungsmodells (124), das einer Positionsbeziehung zwischen der Garnführung (5a) und der Abbildungsvorrichtung entspricht, die in der Synthesefaserherstellungsanlage enthalten ist, aus der Vielzahl von Bestimmungsmodellen (124), und
einen Bestimmungsschritt, ob die Anomalie vorhanden ist oder nicht, basierend auf dem ausgewählten Bestimmungsmodell (124) und dem Wärmebild, das im Eingabeschritt eingegeben wurde.

18. Das computerimplementierte Anomaliebestimmungsverfahren gemäß einem der Ansprüche 13 bis 16, wobei

die Synthesefaserherstellungsanlage ferner eine Abbildungsvorrichtung umfasst, die konfiguriert ist, dass sie ein Bild der Garnführung (5a) aufnehmen zu können, und
das im Eingabeschritt einzugebende Wärmebild von der Bildaufnahmevorrichtung erfasst wird.

19. Das computerimplementierte Anomaliebestimmungsverfahren gemäß einem der Ansprüche 13 bis 18, wobei die Anomalie eine Anomalie im Garnverlauf umfasst.

20. Das computerimplementierte Anomaliebestimmungsverfahren gemäß einem der Ansprüche 14 bis 16, das ferner umfasst

einen Erfassungsschritt einer Vielzahl der trainierten Bestimmungsmodelle (124) für entsprechende Betriebsbedingungen der Synthesefaserherstellungsanlage, die ähnlich sind, und
der Bestimmungsschritt umfasst:

einen Auswahlschritt des Bestimmungsmodells (124), das dem aktuellen Betriebszustand der Synthesefaserherstellungsanlage entspricht, aus der Vielzahl von Bestimmungsmodellen (124); und
einen Bestimmungsschritt, ob die Anomalie vorliegt oder nicht, basierend auf dem ausgewählten Bestimmungsmodell (124) und dem Wärmebild, das im Eingabeschritt als Bestimmungseingabe eingegeben wurde.

21. Ein Anomaliebestimmungsprogramm, das eine Anomaliebestimmungsvorrichtung dazu veranlasst, Folgendes auszuführen:

einen Eingabeschritt eines Wärmebildes, das einen Garnlaufbereich umfasst, der ein Teil einer Garnführung (5a) ist, die in einer Synthesefaserherstellungsanlage enthalten ist;
einen Bestimmungsschritt, ob eine Anomalie in Bezug auf ein Garn (93) vorliegt, basierend auf dem im Eingabeschritt eingegebenen Wärmebild; und
einen Ausgabeschritt eines Bestimmungsergebnisses des Bestimmungsschritts.

22. Das Anomaliebestimmungsprogramm gemäß Anspruch 21, wobei

in dem Bestimmungsschritt auf der Grundlage des in dem Eingabeschritt eingegebenen Wärmebildes und eines durch maschinelles Lernen einer Vielzahl von Trainingsdaten (123) erzeugten Bestimmungsmodells (124) bestimmt wird, ob die Anomalie vorliegt oder nicht, und
jedes der mehreren Trainingsdaten (123) als Label zuordnet, ob die Anomalie in Bezug auf ein durch die Garnführung (5a) laufendes Garn (93) vorliegt oder nicht, mit einem Trainings-Wärmebild, in dem die Garnführung (5a), die in der Synthesefaserherstellungsanlage oder einer anderen Synthesefaserherstellungsanlage enthalten ist, erscheint.

23. Das Anomaliebestimmungsprogramm gemäß Anspruch 22, wobei jedes der mehreren Trainingsdaten (123) als Label eine Art der Anomalie zuordnet.

24. Das Anomaliebestimmungsprogramm gemäß Anspruch 22 oder 23, wobei das Anomaliebestimmungsprogramm die Anomaliebestimmungsvorrichtung ferner veranlasst, einen Erzeugungsschritt des Bestimmungsmodells (124) aus der Vielzahl von Trainingsdaten (123) auszuführen.

25. Das Anomaliebestimmungsprogramm gemäß einem der Ansprüche 22 bis 24, wobei

die Synthesefaserherstellungsanlage ferner eine Abbildungsvorrichtung umfasst, die konfiguriert ist, ein Bild der Garnführung (5a) aufnehmen zu können, wobei
das im Eingabeschritt einzugebende Wärmebild von der Bildaufnahmevorrichtung erfasst wird, und
das Anomaliebestimmungsprogramm ferner bewirkt, dass die Anomaliebestimmungsvorrichtung einen Erfassungsschritt einer Vielzahl der trainierten Bestimmungsmodelle (124) für entsprechende Positionsbeziehungen zwischen der Garnführung und der Abbildungsvorrichtung, die in der Synthesefaserherstellungsanlage oder der anderen Synthesefaserherstellungsanlage enthalten ist, ausführt, und
der Bestimmungsschritt umfasst:

einen Auswahlschritt des Bestimmungsmodells (124), das einer Positionsbeziehung zwischen der Garnführung (5a) und der Abbildungsvorrichtung entspricht, die in der Synthesefaserherstellungsanlage enthalten ist, aus der Vielzahl von Bestimmungsmodellen (124), und
einen Bestimmungsschritt, ob die Anomalie vorhanden ist oder nicht, basierend auf dem ausgewählten Bestimmungsmodell (124) und dem Wärmebild, das im Eingabeschritt eingegeben wurde.

26. Das Anomaliebestimmungsprogramm gemäß einem der Ansprüche 21 bis 24, wobei

die Synthesefaserherstellungsanlage ferner eine Abbildungsvorrichtung umfasst, die so konfiguriert ist, dass sie ein Bild der Garnführung (5a) aufnehmen zu können, und
das im Eingabeschritt einzugebende Wärmebild von der Bildaufnahmevorrichtung erfasst wird.

27. Das Anomaliebestimmungsprogramm gemäß einem der Ansprüche 21 bis 26, wobei die Anomalie eine Anomalie im Garnverlauf umfasst.

28. Das Anomaliebestimmungsprogramm gemäß einem der Ansprüche 22 bis 24, wobei

das Anomaliebestimmungsprogramm ferner bewirkt, dass die Anomaliebestimmungsvorrichtung einen Erfassungsschritt einer Vielzahl der trainierten Bestimmungsmodelle (124) für entsprechende Betriebsbedingungen der Synthesefaserherstellungsanlage, die ähnlich sind, ausführt, und
der Bestimmungsschritt umfasst:

einen Auswahlschritt des Bestimmungsmodells (124), das dem aktuellen Betriebszustand der Synthesefaserherstellungsanlage entspricht, aus der Vielzahl von Bestimmungsmodellen (124); und
einen Bestimmungsschritt, ob die Anomalie vorliegt oder nicht, basierend auf dem ausgewählten Bestimmungsmodell (124) und dem Wärmebild für die Bestimmungseingabe im Eingabeschritt.

## Revendications

1. Dispositif de détermination d'anomalie, comprenant :

une unité d'entrée (50e) configurée pour recevoir une entrée d'une image thermique comportant une région de trajet de fil, qui est une partie d'un guide-fil (5a) intégré dans un équipement de fabrication de fibres synthétiques ;
une unité de détermination (50c) configurée pour déterminer s'il existe ou non une anomalie concernant un fil (93) sur la base de l'image thermique entrée dans l'unité d'entrée (50e) ; et
une unité de sortie (50f) configurée pour délivrer en sortie un résultat de détermination de l'unité de détermination (50c).

2. Dispositif de détermination d'anomalie selon la revendication 1,

dans lequel l'unité de détermination (50c) détermine s'il existe ou non l'anomalie sur la base de l'image thermique de détermination entrée dans l'unité d'entrée (50e) et d'un modèle de détermination (124) généré en effectuant un apprentissage automatique sur une pluralité d'éléments de données de formation (123), et
chacun de la pluralité d'éléments de données de formation (123) associe, en tant qu'étiquette, le fait qu'il existe ou non l'anomalie concernant le fil (93) passant à travers le guide-fil (5a) à une image thermique de formation dans laquelle apparaît le guide-fil (5a) intégré dans l'équipement de fabrication de fibres synthétiques ou dans un autre équipement de fabrication de fibres synthétiques.

3. Dispositif de détermination d'anomalie selon la revendication 2,
dans lequel chacun de la pluralité d'éléments de données de formation (123) associe, en tant qu'étiquette, un type de l'anomalie.

4. Dispositif de détermination d'anomalie selon la revendication 2 ou 3, comprenant en outre
une unité de formation (50b) configurée pour générer le modèle de détermination (124) à partir de la pluralité d'éléments de données de formation (123).

5. Dispositif de détermination d'anomalie selon l'une quelconque des revendications 2 à 4,

dans lequel l'équipement de fabrication de fibres synthétiques comporte en outre un dispositif de prise d'image configuré pour être capable de prendre une image du guide-fil (5a),
l'image thermique à entrer dans l'unité d'entrée (50e) est acquise à partir du dispositif de prise d'image,
le dispositif de détermination d'anomalie comporte une pluralité de modèles de détermination formés (124) pour des relations positionnelles correspondantes entre le guide-fil et le dispositif de prise d'image intégrés dans l'équipement de fabrication de fibres synthétiques ou dans l'autre équipement de fabrication de fibres synthétiques, et
l'unité de détermination (50c)

sélectionne, parmi la pluralité de modèles de détermination (124), le modèle de détermination (124) correspondant à une relation positionnelle entre le guide-fil (5a) et le dispositif de prise d'image intégrés dans l'équipement de fabrication de fibres synthétiques, et
détermine s'il existe ou non l'anomalie sur la base du modèle de détermination (124) sélectionné et de l'image thermique de détermination entrée dans l'unité d'entrée (50e).

6. Dispositif de détermination d'anomalie selon l'une quelconque des revendications 1 à 4,

dans lequel l'équipement de fabrication de fibres synthétiques comporte en outre un dispositif de prise d'image configuré pour être capable de prendre une image du guide-fil (5a), et
l'image thermique à entrer dans l'unité d'entrée (50e) est acquise à partir du dispositif de prise d'image.

7. Dispositif de détermination d'anomalie selon l'une quelconque des revendications 1 à 6,
dans lequel l'anomalie comporte une anomalie d'un trajet de fil.

8. Dispositif de détermination d'anomalie selon l'une quelconque des revendications 1 à 7,
dans lequel l'anomalie comporte une anomalie de tension de fil.

9. Dispositif de détermination d'anomalie selon l'une quelconque des revendications 1 à 8,
dans lequel l'anomalie comporte une anomalie de quantité d'huile appliquée au fil (93).

10. Dispositif de détermination d'anomalie selon l'une quelconque des revendications 2 à 4,

dans lequel le dispositif de détermination d'anomalie comporte une pluralité des modèles de détermination formés (124) pour des conditions opérationnelles correspondantes de l'équipement de fabrication de fibres synthétiques qui sont similaires, et
l'unité de détermination (50c) :

sélectionne, parmi la pluralité de modèles de détermination (124), le modèle de détermination (124) correspondant à la condition opérationnelle actuelle de l'équipement de fabrication de fibres synthétiques, et
détermine s'il existe ou non l'anomalie sur la base du modèle de détermination (124) sélectionné et de l'image thermique de détermination entrée dans l'unité d'entrée (50e).

11. Dispositif de détermination d'anomalie selon l'une quelconque des revendications 1 à 10,
dans lequel l'équipement de fabrication de fibres synthétiques est une machine de filage-bobinage.

12. Dispositif de détermination d'anomalie selon l'une quelconque des revendications 1 à 10,
dans lequel l'équipement de fabrication de fibres synthétiques est une machine de fausse torsion.

13. Procédé de détermination d'anomalie mis en œuvre par ordinateur, comprenant :

une étape d'entrée d'une image thermique comportant une région de trajet de fil, qui est une partie d'un guide-fil (5a) intégré dans un équipement de fabrication de fibres synthétiques ;
une étape consistant à déterminer s'il existe ou non une anomalie concernant un fil (93) sur la base de l'image thermique entrée lors de l'étape d'entrée ; et
une étape consistant à délivrer en sortie un résultat de détermination de l'étape de détermination.

**14.** Procédé de détermination d'anomalie mis en œuvre par ordinateur selon la revendication 13,

dans lequel, lors de l'étape de détermination, il est déterminé s'il existe ou non l'anomalie sur la base de l'image thermique de détermination entrée lors de l'étape d'entrée et d'un modèle de détermination (124) généré en effectuant un apprentissage automatique d'une pluralité d'éléments de données de formation (123), et
chacun de la pluralité d'éléments de données de formation (123) associe, en tant qu'étiquette, le fait qu'il existe ou non l'anomalie concernant le fil (93) passant à travers le guide-fil (5a) à une image thermique de formation dans laquelle apparaît le guide-fil (5a) intégré dans l'équipement de fabrication de fibres synthétiques ou dans un autre équipement de fabrication de fibres synthétiques.

**15.** Procédé de détermination d'anomalie mis en œuvre par ordinateur selon la revendication 14,
dans lequel chacun de la pluralité d'éléments de données de formation (123) associe, en tant qu'étiquette, un type de l'anomalie.

**16.** Procédé de détermination d'anomalie mis en œuvre par ordinateur selon la revendication 14 ou 15, comprenant en outre
une étape consistant à générer le modèle de détermination (124) à partir de la pluralité d'éléments de données de formation (123).

**17.** Procédé de détermination d'anomalie mis en œuvre par ordinateur selon l'une quelconque des revendications 14 à 16, dans lequel

l'équipement de fabrication de fibres synthétiques comporte en outre un dispositif de prise d'image configuré pour être capable de prendre une image du guide-fil (5a), l'image thermique à entrer lors de l'étape d'entrée est acquise à partir du dispositif de prise d'image, et
le procédé de détermination d'anomalie mis en œuvre par ordinateur comprend en outre une étape consistant à acquérir une pluralité de modèles de détermination formés (124) pour des relations positionnelles correspondantes entre le guide-fil et le dispositif de prise d'image intégrés dans l'équipement de fabrication de fibres synthétiques ou dans l'autre équipement de fabrication de fibres synthétiques, et l'étape de détermination comporte :

une étape consistant à sélectionner, parmi la pluralité de modèles de détermination (124), le modèle de détermination (124) correspondant à une relation positionnelle entre le guide-fil (5a) et le dispositif de prise d'image intégrés dans l'équipement de fabrication de fibres synthétiques, et
une étape consistant à déterminer s'il existe ou non l'anomalie sur la base du modèle de détermination (124) sélectionné et de l'image thermique de détermination entrée lors de l'étape d'entrée.

**18.** Procédé de détermination d'anomalie mis en œuvre par ordinateur selon l'une quelconque des revendications 13 à 16,

dans lequel l'équipement de fabrication de fibres synthétiques comporte en outre un dispositif de prise d'image configuré pour être capable de prendre une image du guide-fil (5a), et
l'image thermique à entrer lors de l'étape d'entrée est acquise à partir du dispositif de prise d'image.

**19.** Procédé de détermination d'anomalie mis en œuvre par ordinateur selon l'une quelconque des revendications 13 à 18,
dans lequel l'anomalie comporte une anomalie d'un trajet de fil.

**20.** Procédé de détermination d'anomalie mis en œuvre par ordinateur selon l'une quelconque des revendications 14 à 16, comprenant en outre

une étape consistant à acquérir une pluralité des modèles de détermination formés (124) pour des conditions opérationnelles correspondantes de l'équipement de fabrication de fibres synthétiques qui sont similaires, et l'étape de détermination comporte :

une étape consistant à sélectionner, parmi la pluralité de modèles de détermination (124), le modèle de détermination (124) correspondant à la condition opérationnelle actuelle de l'équipement de fabrication de fibres synthétiques ; et

une étape consistant à déterminer s'il existe ou non l'anomalie sur la base du modèle de détermination (124) sélectionné et de l'image thermique de détermination entrée lors de l'étape d'entrée.

21. Programme de détermination d'anomalie pour amener un dispositif de détermination d'anomalie à exécuter :

une étape d'entrée d'une image thermique comportant une région de trajet de fil, qui est une partie d'un guide-fil (5a) intégré dans un équipement de fabrication de fibres synthétiques ;

une étape consistant à déterminer s'il existe ou non une anomalie concernant un fil (93) sur la base de l'image thermique entrée lors de l'étape d'entrée ; et

une étape consistant à délivrer en sortie un résultat de détermination de l'étape de détermination.

22. Programme de détermination d'anomalie selon la revendication 21,

dans lequel, lors de l'étape de détermination, il est déterminé s'il existe ou non l'anomalie sur la base de l'image thermique de détermination entrée lors de l'étape d'entrée et d'un modèle de détermination (124) généré en effectuant un apprentissage automatique d'une pluralité d'éléments de données de formation (123), et

chacun de la pluralité d'éléments de données de formation (123) associe, en tant qu'étiquette, le fait qu'il existe ou non l'anomalie concernant un fil (93) passant à travers le guide-fil (5a) à une image thermique de formation dans laquelle apparaît le guide-fil (5a) intégré dans l'équipement de fabrication de fibres synthétiques ou dans un autre équipement de fabrication de fibres synthétiques.

23. Programme de détermination d'anomalie selon la revendication 22,
dans lequel chacun de la pluralité d'éléments de données de formation (123) associe, en tant qu'étiquette, un type de l'anomalie.

24. Programme de détermination d'anomalie selon la revendication 22 ou 23,
dans lequel le programme de détermination d'anomalie amène en outre le dispositif de détermination d'anomalie à exécuter une étape consistant à générer le modèle de détermination (124) à partir de la pluralité d'éléments de données de formation (123).

25. Programme de détermination d'anomalie selon l'une quelconque des revendications 22 à 24,

dans lequel l'équipement de fabrication de fibres synthétiques comporte en outre un dispositif de prise d'image configuré pour être capable de prendre une image du guide-fil (5a),

l'image thermique à entrer lors de l'étape d'entrée est acquise à partir du dispositif de prise d'image, et

le programme de détermination d'anomalie amène en outre le dispositif d'anomalie à exécuter une étape consistant à acquérir une pluralité des modèles de détermination formés (124) pour des relations positionnelles correspondantes entre le guide-fil et le dispositif de prise d'image intégrés dans l'équipement de fabrication de fibres synthétiques ou dans l'autre équipement de fabrication de fibres synthétiques, et l'étape de détermination comporte :

une étape consistant à sélectionner, parmi la pluralité de modèles de détermination (124), le modèle de détermination (124) correspondant à une relation positionnelle entre le guide-fil (5a) et le dispositif de prise d'image intégrés dans l'équipement de fabrication de fibres synthétiques, et

une étape consistant à déterminer s'il existe ou non l'anomalie sur la base du modèle de détermination (124) sélectionné et de l'image thermique de détermination entrée lors de l'étape d'entrée.

26. Programme de détermination d'anomalie selon l'une quelconque des revendications 21 à 24,

dans lequel l'équipement de fabrication de fibres synthétiques comporte en outre un dispositif de prise d'image configuré pour être capable de prendre une image du guide-fil (5a), et

l'image thermique à entrer lors de l'étape d'entrée est acquise à partir du dispositif de prise d'image.

27. Programme de détermination d'anomalie selon l'une quelconque des revendications 21 à 26,
dans lequel l'anomalie comporte une anomalie d'un trajet de fil.

**28.** Programme de détermination d'anomalie selon l'une quelconque des revendications 22 à 24,

dans lequel le programme de détermination d'anomalie amène en outre le dispositif de détermination d'anomalie à exécuter une étape consistant à acquérir une pluralité des modèles de détermination formés (124) pour des conditions opérationnelles correspondantes de l'équipement de fabrication de fibres synthétiques qui sont similaires, et

l'étape de détermination comporte :

une étape consistant à sélectionner, parmi la pluralité de modèles de détermination (124), le modèle de détermination (124) correspondant à la condition opérationnelle actuelle de l'équipement de fabrication de fibres synthétiques ; et

une étape consistant à déterminer s'il existe ou non l'anomalie sur la base du modèle de détermination (124) sélectionné et de l'image thermique de détermination entrée lors de l'étape d'entrée.

FIG.1

FIG.2

WINDING POSITION

STANDBY POSITION

FIG.3

# FIG.4

FIRST OPERATING CONDITION

TRAINING THERMAL IMAGE
(NORMAL STATE and/or ABNORMAL STATE)

→

CORRECT ANSWER DATA INDICATING
WHETHER YARN OR YARN GUIDE
OF TRAINING THERMAL IMAGE
IS NORMAL OR ABNORMAL

→

TRAINING UNIT
(MACHINE
LEARNING)

⇒

DETERMINATION
MODEL (A)

SECOND OPERATING CONDITION

TRAINING THERMAL IMAGE
(NORMAL STATE and/or ABNORMAL STATE)

→

CORRECT ANSWER DATA INDICATING
WHETHER YARN OR YARN GUIDE
OF TRAINING THERMAL IMAGE
IS NORMAL OR ABNORMAL

→

TRAINING UNIT
(MACHINE
LEARNING)

⇒

DETERMINATION
MODEL (B)

⋮

FIG.5

FIRST OPERATING CONDITION

DETERMINATION
THERMAL IMAGE

DETERMINATION
MODEL (A)

DETERMINATION RESULT
INDICATING WHETHER YARN IS
NORMAL OR ABNORMAL

SECOND OPERATING CONDITION

DETERMINATION
THERMAL IMAGE

DETERMINATION
MODEL (B)

DETERMINATION RESULT
INDICATING WHETHER YARN IS
NORMAL OR ABNORMAL

FIG.6

(a)

93

5a

61

(b)

5a

61

FIG.7

(a)

93

5a

61

(b)

5a

61

FIG.8

START

S101 — ABNORMALITY DETERMINATION TIMING? — No

Yes

S102 — INSTRUCT IMAGE CAPTURE DEVICE TO CAPTURE IMAGE OF YARN PATH REGION

S104 — DETERMINE ABNORMALITY IN YARN OR YARN GUIDE USING DETERMINATION THERMAL IMAGE INPUT FROM IMAGE CAPTURE DEVICE AND DETERMINATION MODEL

S105 — DETERMINED AS ABNORMALITY? — Yes — S106

No

NOTIFY OPERATOR OF ABNORMALITY

FIG.9

CONTROL DEVICE ⟋50

| PROCESSOR ⟋81 | ROM ⟋82(50d) | RAM ⟋83(50d) | COMMUNICATION INTERFACE ⟋84 |

BS

AUXILIARY STORAGE DEVICE ⟋90(50d)

TRAINING DATASET — 122

DETERMINATION MODEL — 124

TRAINING PROGRAM — 126

ABNORMALITY DETERMINATION PROGRAM — 128

INPUT INTERFACE ⟋87

DISPLAY INTERFACE ⟋85

INPUT DEVICE ⟋88

DISPLAY DEVICE ⟋86

FIG.10

122

| TRAINING THERMAL IMAGE | ABNORMALITY TYPE (LABEL) |
|---|---|
| THERMAL IMAGE A | ABNORMALITY A |
| THERMAL IMAGE B | ABNORMALITY B |
| THERMAL IMAGE C | ABNORMALITY C |
| THERMAL IMAGE D | ABNORMALITY D |
| . | . |

123
123
123
123

ABNORMALITY A : YARN PATH ABNORMALITY

ABNORMALITY B : TENSION ABNORMALITY

ABNORMALITY C : OIL APPLICATION AMOUNT ABNORMALITY

ABNORMALITY D : WEAR ABNORMALITY

FIG.11

CONTROL DEVICE

DETERMINATION MODEL ⌐124

TRAINING DATASET ⌐122

TRAINING UNIT ⌐50b

INPUT UNIT ⌐50e

DETERMINATION UNIT ⌐50c

OUTPUT UNIT ⌐50f

⌐50

THERMAL IMAGE
(FROM IMAGE CAPTURE DEVICE 6)

DETERMINATION
RESULT

FIG.12

ABNORMALITY A : YARN PATH ABNORMALITY

ABNORMALITY B : TENSION ABNORMALITY

ABNORMALITY C : OIL APPLICATION AMOUNT ABNORMALITY

ABNORMALITY D : WEAR ABNORMALITY

EP 4 425 426 B1

FIG.13

ABNORMALITY A : YARN PATH ABNORMALITY

ABNORMALITY B : TENSION ABNORMALITY

ABNORMALITY C : OIL APPLICATION AMOUNT ABNORMALITY

ABNORMALITY D : WEAR ABNORMALITY

EP 4 425 426 B1

FIG.14

FIG.15

122A

| OPERATING CONDITION | TRAINING THERMAL IMAGE | ABNORMALITY TYPE (LABEL) |
|---|---|---|
| OPERATING CONDITION A | THERMAL IMAGE A | ABNORMALITY A |
| OPERATING CONDITION B | THERMAL IMAGE B | ABNORMALITY B |
| OPERATING CONDITION C | THERMAL IMAGE C | ABNORMALITY C |
| OPERATING CONDITION D | THERMAL IMAGE D | ABNORMALITY D |
| . . . | . . . | . . . |

123A
123A
123A
123A

ABNORMALITY A : YARN PATH ABNORMALITY

ABNORMALITY B : TENSION ABNORMALITY

ABNORMALITY C : OIL APPLICATION AMOUNT ABNORMALITY

ABNORMALITY D : WEAR ABNORMALITY

FIG.16

START

S101 — ABNORMALITY DETERMINATION TIMING? — No

Yes

S102 — INSTRUCT IMAGE CAPTURE DEVICE TO CAPTURE IMAGE OF YARN PATH REGION

S103 — SELECT DETERMINATION MODEL CORRESPONDING TO OPERATING CONDITION

S104 — DETERMINE ABNORMALITY IN YARN OR YARN GUIDE USING DETERMINATION THERMAL IMAGE INPUT FROM IMAGE CAPTURE DEVICE AND DETERMINATION MODEL

S105 — DETERMINED AS ABNORMALITY? — Yes — S106

No

NOTIFY OPERATOR OF ABNORMALITY

FIG.17

122B

| POSITION INFORMATION | TRAINING THERMAL IMAGE | ABNORMALITY TYPE (LABEL) |
|---|---|---|
| POSITION INFORMATION A | THERMAL IMAGE A | ABNORMALITY A |
| POSITION INFORMATION B | THERMAL IMAGE B | ABNORMALITY B |
| POSITION INFORMATION C | THERMAL IMAGE C | ABNORMALITY C |
| POSITION INFORMATION D | THERMAL IMAGE D | ABNORMALITY D |
| . | . | . |

123B — POSITION INFORMATION A
123B — POSITION INFORMATION B
123B — POSITION INFORMATION C
123B — POSITION INFORMATION D

ABNORMALITY A : YARN PATH ABNORMALITY

ABNORMALITY B : TENSION ABNORMALITY

ABNORMALITY C : OIL APPLICATION AMOUNT ABNORMALITY

ABNORMALITY D : WEAR ABNORMALITY

FIG.18

```
                          ┌─────────┐
                          │  START  │
                          └────┬────┘
                               │◄──────────────────┐
                               │◄─────────────┐    │
                               │◄────────┐    │    │
                               ▼         │    │    │
                           ╱╲            │    │    │
S101────────────────      ╱    ╲         │    │    │
                        ╱ ABNORMALITY╲  No│    │    │
                       ╱ DETERMINATION ╲──┘    │    │
                        ╲   TIMING?   ╱        │    │
                         ╲          ╱          │    │
                           ╲      ╱            │    │
                             ╲  ╱              │    │
                              ▼ Yes            │    │
                ┌──────────────────────────────┐  │    │
S102──────      │   INSTRUCT IMAGE CAPTURE DEVICE│  │    │
                │TO CAPTURE IMAGE OF YARN PATH REGION│  │
                └──────────────┬───────────────┘  │    │
                               ▼                   │    │
                ┌──────────────────────────────┐  │    │
S103A─────      │    SELECT DETERMINATION MODEL  │  │    │
                │CORRESPONDING TO POSITIONAL RELATIONSHIP│
                └──────────────┬───────────────┘  │    │
                               ▼                   │    │
                ┌──────────────────────────────┐  │    │
S104──────      │DETERMINE ABNORMALITY IN YARN OR YARN GUIDE│
                │ USING DETERMINATION THERMAL IMAGE INPUT │
                │FROM IMAGE CAPTURE DEVICE AND DETERMINATION MODEL│
                └──────────────┬───────────────┘       │
                               ▼                        │
                             ╱╲                         │
S105────────          ╱          ╲    Yes    S106      │
                    ╱ DETERMINED AS ╲────────┐          │
                    ╲ ABNORMALITY? ╱         │          │
                      ╲          ╱           ▼          │
                        ╲      ╱      ┌──────────────┐  │
                          No          │NOTIFY OPERATOR│  │
                                      │ OF ABNORMALITY│  │
                                      └───────┬──────┘  │
                                              └─────────┘
```

FIG.19

IM1

R1

93

5

61

REGION ESTIMATION

IM2

R2

5

61

CUT OUT

IM3

CUT-OUT IMAGE

FIG.20

**REFERENCES CITED IN THE DESCRIPTION**

**Patent documents cited in the description**

- JP H11279923 A

- JP H10280226 A